# EUROPÄISCHE PATENTSCHRIFT

(11) **EP 1 436 194 B1**
(45) Veröffentlichungstag und Bekanntmachung des Hinweises auf die Patenterteilung: **17.08.2005**
(21) Anmeldenummer: 02774147.9
(22) Anmeldetag: 23.09.2002
(51) Int. Cl.: B64D 11/00, B60R 5/00, B61D 37/00, A47B 46/00

(54) **AUFHÄNGEVORRICHTUNG FÜR ABSENKBARE GEPÄCKABLAGEBEHÄLTER**
SUSPENSION DEVICE FOR LOWERABLE LUGGAGE COMPARTMENTS
DISPOSITIF DE SUSPENSION POUR COFFRES A BAGAGES ABAISSABLES

(30) Priorität: 17.10.2001 AT 16532001; 18.04.2002 AT 6002002
(43) Veröffentlichungstag der Anmeldung: 14.07.2004
(73) Patentinhaber: Fischer Advanced Composite Components AG, 4910 Ried im Innkreis (AT)
(72) Erfinder: STEPHAN, Walter, A., A-4973 St. Martin (AT); FILSEGGER, Hermann, 5163 Mattsee (AT)
(74) Vertreter: Sonn & Partner Patentanwälte
(86) Internationale Anmeldenummer: PCT/AT2002/000275
(87) Internationale Veröffentlichungsnummer: WO 2003/033346

(56) Entgegenhaltungen:
- EP-A- 1 260 434
- DE-A- 4 130 644
- DE-A- 4 335 151
- DE-A- 19 617 657
- DE-C- 4 446 772

## Beschreibung

### Beschreibung für folgende Verstragsstaaten: AT, DE, FR, GB, IT, SE

Die Erfindung betrifft eine Aufhängevorrichtung für absenkbare Gepäckablagebehälter mit zumindest einem Federelement zur Unterstützung der Bewegung des Behälters in seine geschlossene Stellung entgegen der Schwerkraft und zumindest einem Dämpfungselement zur Dämpfung der Bewegung des Behälters in seine geöffnete Stellung, mit einer Einrichtung zur Erfassung des Gewichts des Behälters und zumindest einem in Abhängigkeit des erfassten Gewichts des Behälters zuschaltbaren bzw. umschaltbaren zusätzlichen Federelements, wobei eine Rückhalteeinrichtung zur Fixierung des zumindest einen zusätzlichen Federelements vorgesehen ist und die Rückhalteeinrichtung durch die Einrichtung zur Erfassung des Gewichts des Behälters betätigbar ist.

Weiters betrifft die Erfindung einen absenkbaren Gepäckablagebehälter mit einer derartigen Aufhängevorrichtung, wobei zwischen dem Behälter und einem feststehenden Strukturbauteil seitlich des Behälters zumindest ein Federelement zur Unterstützung der Bewegung des Behälters in seine geschlossene Stellung entgegen der Schwerkraft und zumindest ein Dämpfungselement zur Dämpfung der Bewegung des Behälters in seine geöffnete Stellung angeordnet ist, wobei mit dem Behälterteil eine Einrichtung zur Erfassung des Gewichts des Behälters verbunden ist.

Die vorliegende Erfindung bezieht sich hauptsächlich auf Gepäckablagebehälter, wie sie in Passagierflugzeugen verwendet werden. Sie ist jedoch auch auf Gepäckablagebehälter, beispielsweise in Schienenfahrzeugen oder anderen zum Passagiertransport eingerichteten Transportmittel, anwendbar.

Gepäckablagebehälter in Passagierflugzeugen bestehen üblicherweise aus über den Köpfen der Passagiere montierten Fächern, welche eine Öffnung aufweisen, die beispielsweise mit einer verschwenkbaren Klappe verschließbar ist. Um ein Gepäckstück in den Behälter zu legen oder dieses zu entnehmen, muss der Passagier die Klappe öffnen und sein Gepäckstück über die Öffnung in den Behälter heben bzw. aus diesem entnehmen. Dies bedarf insbesondere bei schweren Gepäckstücken eines erheblichen Kraftaufwands, welcher besonders für kleine oder schwache Personen ein Hindernis darstellen kann.

Zur Verbesserung der Situation wurden insbesondere in sehr großen Passagierflugzeugen, welche auch eine größere Raumhöhe aufweisen, Gepäckablagebehälter entwickelt, welche zum Zwecke des Beladens und Entladens nach unten verschwenkt oder abgesenkt werden können. Derartige Verschwenk- oder Absenkmechanismen verfügen üblicherweise über zumindest ein Dämpfungselement, welches die Bewegung des Behälters nach unten dämpft, so dass der Behälter beim Öffnen nicht abrupt nach unten fällt und zu Verletzungen führen kann. Zusätzlich verfügt ein derartiger Mechanismus über zumindest ein Federelement, welches die Bewegung des Behälters entgegen der Schwerkraft in seine geschlossene Stellung unterstützt und somit dem Passagier ein Schließen des beladenen Behälters erleichtert. Diese Dämpfungs- und Federelemente werden so abgestimmt, dass sie für einen durchschnittlich belasteten Gepäckablagebehälter eine ausreichende Dämpfung sowie eine ausreichende Unterstützung der Bewegung in seine geschlossene Stellung ermöglichen. Weicht die Beladung des Behälters von diesem Durchschnittswert, auf den die Dämpfungs- und Federelemente abgestimmt wurden, ab, funktioniert der Mechanismus nicht wie gewünscht. So würde ein unbeladener Behälter nur sehr schwer entgegen der Wirkung des Dämpfungselements in seine offene Stellung gebracht werden können, so dass das Öffnen des Behälters nur durch Ausübung einer relativ hohen Zugkraft ermöglicht würde. Andererseits könnte ein überbeladener Behälter auch nur schwer und unter körperlichem Einsatz gegen die Schwerkraft in seine geschlossene Stellung gebracht werden. Verstärkt wird das Problem dadurch, dass für zukünftige, für immer mehr Passagiere ausgelegten Flugzeuge die Gepäckablagebehälter immer größer gebaut werden und immer höheren Belastungen standhalten müssen. Derartige Gepäckablagebehälter können beispielsweise für Belastungen zwischen 0 und 60 kg ausgelegt sein. Dementsprechend ist es nahezu unmöglich, den Verschwenk- oder Absenkmechanismus für einen derartigen Gepäckablagebehälter für alle Belastungen optimal auszulegen.

Die DE 41 30 644 A1 zeigt eine Überkopfgepäckablage, deren Bedienung nur eine geringe und von der Zuladung und Stellung des beweglichen Behälters weitgehend unabhängige Betätigungskraft erfordert. Zu diesem Zweck ist die zur Unterstützung des Schließvorganges vorgesehene Gasfeder verschwenkbar angeordnet, so dass der Anlenkpunkt an den Oberhebel und somit das auf den Oberhebel wirkende Drehmoment, welches den Schließvorgang des Behälters unterstützt, veränderbar ist. Das Gewicht des beweglichen Behälters der Überkopfgepäckablage wird über einen Wägezapfen erfasst, der auf einen mit dem Federelement verbundenen Wägehebel einwirkt. Je nach Gewicht der Beladung des Behälters wird die Gasfeder mehr oder weniger verschwenkt und dadurch die Gewichtskraft des Behälters kompensiert. Damit während des Schließvorgangs des Behälters die Gasfeder nicht in ihre ursprüngliche Lage zurückgeschwenkt werden kann, ist eine Blockiereinrichtung vorgesehen, welche über einen Bowdenzug aktiviert wird, sobald zur Einleitung des Schaltvorganges von unten ein Druck auf eine Arretierungsplatte an der Unterseite des verschwenkbaren Behälters ausgeübt wird. Zusätzlich wird ab Erreichen einer gewissen Höhe des absenkbaren Behälters die Blockiereinrichtung automatisch aktiviert, so dass diese auch unabhängig vom Zustand des Bowdenzugs wirkt.

Die DE 43 35 151 A1 zeigt ebenfalls eine Überkopfgepäckablage mit einem absenkbaren Behälter, bei der zur Unterstützung des Schließvorgangs ein weiteres Federelement in Abhängigkeit der Beladung des Behälters zuschaltbar ist. Ohne oder bei geringer Beladung des Behälters wird ein mit dem zusätzlichen Federelement verbundener Unterstützungshebel blockiert, so dass das zusätzliche Federelement keine zusätzliche Kraft auf den Behälter ausübt. Überschreitet die Beladung des Behälters einen gewissen Grenzwert, der durch eine gewichtsbedingte Auslenkung des beweglichen Behälters erfasst wird, dann kann die Blockierung des Unterstützungshebels durch einen aktiven Druck von unten auf eine Auslöseplatte am beweglichen Behälterteil freigegeben werden und das zusätzliche Federelement wirkt zur Unterstützung des Schließvorgangs. Dabei ist zwischen der Auslöseplatte und dem Unterstützungshebel ein Bowdenzug zur Übertragung des Drucks auf die Auslöseplatte auf dem Blockierhaken angeordnet. Für eine Zuschaltung der Unterstützungsfeder ist daher ein aktives Zutun des Passagiers zwingend erforderlich, wodurch die Bedienung erschwert wird. Die zwingend erforderliche Verbindung zwischen der Auslöseplatte und dem Blockierhaken der Unterstützungsgasfeder erhöht auch den Montageaufwand und den Wartungsaufwand sowie die Fehleranfälligkeit.

Die DE 196 17 657 A1 zeigt eine Aufhängevorrichtung für absenkbare Gepäckablagebehälter mit zumindest einem Federelement zur Unterstützung der Bewegung des Behälters in seine geschlossene Stellung entgegen der Schwerkraft und zumindest einem Dämpfungselement zur Dämpfung der Bewegung des Behälters in seine geöffnete Stellung und mit einer Einrichtung zur Erfassung des Gewichts des Behälters, wobei in Abhängigkeit des Gewichts des Behälters die Federelemente durch Verschiebung der Momentenarme an das Gewicht des Behälters angepasst werden.

Die EP 1 260 434 A1 zeigt eine Aufhängevorrichtung für absenkbare Gepäckablagebehälter der gegenständlichen Art, wobei in Abhängigkeit des Gewichts des Behälters ein zusätzliches Federelement zuschaltbar ist. Dabei wird die zusätzliche Federkraft erst bei Bewegung des Gepäckablagebehälters von der geöffneten Position in Richtung der geschlossenen Position aktiviert.

Ziel der vorliegenden Erfindung ist daher die Schaffung einer Aufhängevorrichtung für absenkbare Gepäckablagebehälter, welche auch bei unterschiedlichen Belastungen des Behälters das Heben des Behälters in seine geschlossene Stellung unterstützt und gleichzeitig bei unterschiedlichen Belastungen des Behälters die Bewegung beim Öffnen des Behälters in ausreichendem Maße dämpft. Beispielsweise soll die erforderliche Kraft zum Öffnen des Behälters im leeren Zustand 70 N und die erforderliche Kraft zum Schließen des voll beladenen Behälters 200 N nicht übersteigen. Zudem soll die Aufhängevorrichtung möglichst einfach, leicht, robust und wartungsfrei ausgebildet sein. Weiters soll die Aufhängevorrichtung eine einfache Bedienbarkeit des absenkbaren Gepäckablagebehälters gewährleisten. Die gewichtsbedingte Zuschaltung bzw. Umschaltung des zumindest einen zusätzlichen Federelements soll automatisch ohne aktives Zutun des Passagiers erfolgen. Eine derartige Aufhängevorrichtung soll beispielsweise den in der Flugzeugindustrie üblichen und vorgeschriebenen Belastungen standhalten. Beispielsweise werden für die Betätigung derartiger Gepäckablagebehälter Lebenszeiten von 200.000 Öffnungszyklen gefordert.

Eine weitere Aufgabe der Erfindung besteht in der Schaffung eines absenkbaren Gepäckablagebehälters, welcher auch für unterschiedliche Belastungen leicht bedienbar ist und möglichst einfach, leicht und robust aufgebaut ist und zudem möglichst kostengünstig herstellbar und wartungsfrei ist.

Gelöst wird die erste erfindungsgemäße Aufgabe dadurch, dass eine Einrichtung zum Halten des Behälters in seiner geöffneten Stellung vorgesehen ist. Die vorliegende Erfindung zeichnet sich durch eine direkte Verbindung zwischen der Einrichtung zur Erfassung des Gewichts des Behälters und der Rückhalteeinrichtung aus, so dass automatisch bei Überschreiten eines bestimmten Gewichts ein oder mehrere zusätzliche Federelemente zugeschaltet bzw. umgeschaltet werden können. Die Erfindung zeichnet sich durch einen geringen Montageaufwand, Wartungsaufwand und eine geringe Fehleranfälligkeit aus. Durch diese Konstruktion kann eine zwei- oder mehrstufige Steuerung der Federkraft realisiert werden. In der Regel wird eine zweistufige Steuerung der Federkraft für einwandfreie Funktion der Bedienung des Behälters ausreichen. Der Wert des Gewichts des Behälters, ab dem das zusätzliche Federelement zugeschaltet wird, wird nach den entsprechenden Anforderungen gewählt und beispielsweise mit der Hälfte der höchstzulässigen Belastung festgelegt. Bei Belastungen des Behälters über diesem Grenzwert unterstützt das zumindest eine zusätzliche Federelement das Heben des beladenen Behälters und gewährleistet somit eine optimale Bedienung. Dadurch wird eine optimale Bedienung des absenkbaren Gepäckablagebehälters auch für unterschiedliche Belastungen gewährleistet. Durch die Einrichtung zum Halten des Behälters in seiner geöffneten Stellung kann der Behälter zweckmäßigerweise zum Be- und Entladen in seiner geöffneten Position gehalten werden und dadurch die Handhabung erleichtert werden.

Um die geforderte Robustheit zu erzielen, sind das Federelement sowie das zumindest eine zusätzliche Federelement durch mechanische Schraubenfedern gebildet, welche vorzugsweise koaxial zueinander angeordnet sind. Somit wird eine Serienschaltung zumindest zweier Federelemente gebildet, die durch die koaxiale Anordnung denselben Angriffs- und Wirkpunkt aufweisen. Selbstverständlich ist auch eine parallele Anordnung mehrerer Federelemente möglich. Darüber hinaus sind koaxial zueinander angeordnete Schraubenfedern besonders platzsparend und kompakt.

Gemäß einem weiteren Merkmal der Erfindung ist vorgesehen, dass das zumindest eine zusätzliche Federelement durch eine Hülse umgeben ist, welche durch die Rückhalteeinrichtung fixierbar ist, so dass das zumindest eine zusätzliche Federelement in gespannter Lage fixierbar ist. Somit wird durch die Rückhalteeinrichtung im Falle eines leeren Behälters bzw. eines unter dem Grenzwert beladenen Behälters die zumindest eine zusätzliche Federkraft eines Federelements gespeichert und bei Bedarf durch Betätigung der Rückhalteeinrichtung freigegeben.

Die Rückhalteeinrichtung kann durch einen bewegbaren Haken od. dgl. gebildet sein, der beispielsweise in einen Flansch an der Hülse eingreift und somit diese und die darunter angeordnete Feder in gespannter Lage fixiert.

Alternativ dazu kann die Rückhalteeinrichtung auch durch eine drehbar gelagerte Scheibe gebildet sein, wobei die Drehung der Scheibe durch das erfasste Gewicht des Behälters beeinflussbar ist und dadurch das zumindest eine zusätzliche Federelement zuschaltbar ist. Durch die drehbar gelagerte Scheibe kann das zumindest eine zusätzliche Federelement verriegelt werden, wenn das Gewicht des Behälters unter einem bestimmten Grenzwert liegt und freigegeben werden, wenn das Gewicht des Behälters über einem bestimmten Grenzwert liegt. Bei Anordnung mehrerer zusätzlicher Federelemente kann durch entsprechende Verdrehung der Scheibe die Zuschaltung einzelner zusätzlicher Federelemente oder Kombinationen davon erreicht werden.

Wenn die Scheibe drehfest mit einem Schalthebel verbunden ist und am Behälter eine Schaltkulisse mit zumindest zwei unterschiedlichen durch das Gewicht des Behälters beeinflussbaren Schaltpositionen angeordnet ist, auf welcher der Schalthebel aufliegt, kann eine gewichtsabhängige Zuschaltung oder Umschaltung des zumindest einen zusätzlichen Federelements erfolgen. Die Schaltkulisse zwingt den Schalthebel in eine entsprechende Stellung, wodurch die drehfest mit dem Schalthebel verbundene Scheibe eine entsprechende Stellung einnimmt, so dass dem Gewicht des Behälters entsprechend das zumindest eine zusätzliche Federelement freigegeben oder blockiert wird.

Um ein exaktes Zuschalten des zumindest einen Federelements zu erzielen, wird der Schalthebel vorzugsweise mittels einer Feder od. dgl. gegen die Schaltkulisse gedrückt. Dies kann beispielsweise mit einer Torsionsfeder geschehen.

Eine einfache Realisierung der Schaltkulisse wird durch zumindest zwei Raststufen unterschiedlicher Stufentiefe gebildet, welche in geöffneter Stellung des Behälters mit einem Schalthebel des Federelements zusammenwirkt. Durch gewichtsbedingte Verschiebung des Behälters wird eine Umschaltung des Federelements bewirkt. Die maximale Verschiebung des Behälters legt die Verschiebung der Schaltkulisse fest, die je nach Anzahl der Schaltstufen unterteilt wird. Üblicherweise werden zwei Schaltstufen ausreichen, wobei in einer Schaltposition das eine zusätzliche Federelement blockiert wird und in der anderen Schaltposition freigegeben wird.

Gemäß einem weiteren Merkmal der Erfindung ist vorgesehen, dass die Einrichtung zur Erfassung des Gewichts des Behälters durch eine gegen eine Messfeder auslenkbare Lagerung des Behälters in seiner geöffneten Stellung gebildet ist. Diese rein mechanische Konstruktion ist durch besondere Einfachheit und Robustheit ausgezeichnet. Dabei muss das Gewicht des Behälters nicht stufenlos erfasst werden, sondern lediglich die Überschreitung eines vorbestimmten Grenzwerts erfasst werden. Dabei wird die Messfeder so ausgelegt, dass sie bei Überschreitung der Beladung des Behälters über den vorgegebenen Messwert um eine vorgegebene Auslenkung ausgedehnt werden kann.

Die Lagerung kann durch ein mit dem Behälter verbundenes Element gebildet werden, welches Element beispielsweise ein Bolzen, in einer Führung, beispielsweise einem Langloch, angeordnet und mit einem Ende der Messfeder verbunden ist. Durch das Langloch wird die Auslenkung des Behälters begrenzt.

Wenn das mit dem Behälter verbundene Element mit einem Ende des Bowdenzugs od. dgl. verbunden ist, dessen anderes Ende mit der Rückhalteeinrichtung des zumindest einen zusätzlichen Federelements verbunden ist, so dass bei gewichtsbedingter Auslenkung des Behälters die Rückhalteeinrichtung lösbar ist, kann eine einfache gewichtsgesteuerte Änderung der Federkraft auf rein mechanischem Weg realisiert werden. Dies stellt eine robuste und einfache Realisierungsmöglichkeit für die Verbindung der Einrichtung zur Erfassung des Gewichts und der Einrichtung zur Änderung der Federkraft des Federelements dar.

Um die Absenkvorrichtung an die jeweiligen Anforderungen anpassen zu können, ist der Grenzwert des Gewichts des Behälters vorzugsweise durch eine verstellbare Ausführung der Messfeder einstellbar. Durch die Einstellbarkeit kann auch allfälligen Ermüdungserscheinungen der Einrichtung zur Messung des Gewichts des Gepäckablagebehälters entgegengewirkt werden. Die Verstellbarkeit der Messfeder kann durch Änderung des Federwegs oder andere Methoden erfolgen.

Wenn eine Einrichtung zur Änderung der Federkraft des Federelements und bzw. oder des zumindest einen zusätzlichen Federelements vorgesehen ist, kann eine Anpassung an die jeweiligen Bedingungen, wie z.B. an das Leergewicht des Behälters, oder auch eine Nachjustierung der Federelemente erfolgen.

Dabei kann die Einrichtung zur Änderung der Federkraft des Federelements und bzw. oder des zumindest einen zusätzlichen Federelements durch eine Schraube zur Veränderung der Vorspannung des Federelements und bzw. oder des zumindest einen zusätzlichen Federelements gebildet sein. Durch Verstellung der Schraube wird bei mechanischen Schraubenfedern der Federweg und damit die Vorspannung der Feder eingestellt.

Die Halteeinrichtung ist gemäß einem weiteren Merkmal der Erfindung durch eine federnd gelagerte Kugel gebildet, die in geöffneter Stellung des Behälters in eine entsprechende Rastvertiefung eingreift. Dabei muss die Halteeinrichtung entsprechend positioniert sein und die Federkraft, welche die Kugel in die Rastvertiefung drückt, mindestens so groß sein, dass sie nicht durch die Kraft des Federelements überwunden wird.

Ebenso kann die Einrichtung zur Erfassung des Gewichts des Behälters durch einen elektronischen Sensor gebildet sein, der das momentane Gewicht des Gepäckablagebehälters erfasst. Natürlich erfordert ein derartiger elektronischer Sensor eine Spannungsversorgung und die dazu notwendigen Verbindungsleitungen, welche im Gegensatz zur rein mechanischen Lösung nachteilig sind.

Ebenso kann die Einrichtung zur Änderung der Federkraft des Federelements auch durch ein elektronisches Element, beispielsweise einen elektrischen Stellmotor od. dgl., gebildet sein, der die Federkraft des Federelements stufenlos ändern kann. Auch diese Realisierung weist gegenüber einer einfachen mechanischen Konstruktion Nachteile in Bezug auf Robustheit und Wartungsfreiheit aber auch auf Kosten und Gewicht auf.

Die zweite erfindungsgemäße Aufgabe wird durch einen absenkbaren Gepäckablagebehälter der angegebenen Art gelöst, bei dem die Einrichtung zur Erfassung des Gewichts des Behälters mit einer Einrichtung zur Änderung der Federkraft des Federelements verbunden ist.

Vorteilhafterweise ist beidseitig des Behälters zumindest ein Lenker drehbar angeordnet, der an dem feststehenden Strukturbauteil angelenkt ist, und ist weiters ein Element zur Synchronisation der Bewegung der Lenker an beiden Seiten des Behälters angeordnet. Dadurch wird eine synchrone Bewegung des Behälters während des Absenkvorgangs erzielt und somit Verspannungen oder ungleiche Belastungen der Aufhängevorrichtung vermieden.

Das Synchronisationselement kann in einfachster Weise durch ein drehfest mit den Lenkern an beiden Seiten des Behälters verbundenes Rohr od. dgl. gebildet sein.

Um auch den Schließvorgang des Gepäckablagebehälters zu dämpfen, kann ein weiterer Dämpfer zur Dämpfung der Bewegung des Behälters in seine geschlossene Stellung vorgesehen sein.

Die Erfindung wird anhand der beigefügten Zeichnungen, welche ein Ausführungsbeispiel der Erfindung zeigen, näher erläutert.

Darin zeigen:
Fig. 1 einen Schnitt durch einen Teil eines Rumpfs eines Passagierflugzeugs;
Fig. 2 eine Ausführungsform eines absenkbaren Gepäckablagebehälters in geschlossener Stellung in Seitenansicht;
Fig. 3 den Gepäckablagebehälter gemäß Fig. 2 in teilweiser geöffneter Stellung;
Fig. 4 den Gepäckablagebehälter gemäß Fig. 2 in geöffneter Stellung;
Fig. 5 den Gepäckablagebehälter bei einer Belastung über einen vorgegebenen Grenzwert mit zugeschaltetem, zusätzlichem Federelement;
Fig. 6 das Detail VI aus Fig. 5 in vergrößerter Darstellung;
Fig. 7 das Detail VII aus Fig. 4 in vergrößerter Darstellung;
Fig. 8 eine weitere Ausführungsform eines absenkbaren Gepäckablagebehälters in geschlossener Stellung in perspektivischer Ansicht;
Fig. 9 den absenkbaren Gepäckablagebehälter aus Fig. 8 in geöffneter Stellung;
Fig. 10 das Detail X aus Fig. 9 in vergrößerter Ansicht;
Fig. 11 eine Ausführungsform des Federelements mit koaxial angeordnetem zusätzlichen Federelement bei Aktivierung nur des zusätzlichen Federelements in Seitenansicht in geschnittener Darstellung des Federelements und in der Ansicht auf die als Scheibe ausgebildete Rückhalteeinrichtung samt Schalthebel;
Fig. 12 das Federelement gemäß Fig. 11, in einer anderen Schaltstellung des Schalthebels;
Fig. 13 das Federelement gemäß Fig. 11 in einer weiteren Schaltstellung, bei der beide Federelemente aktiviert sind; und
Fig. 14 eine perspektivische Ansicht eines erfindungsgemäßen absenkbaren Gepäckablagebehälters in geschlossener und geöffneter Stellung.

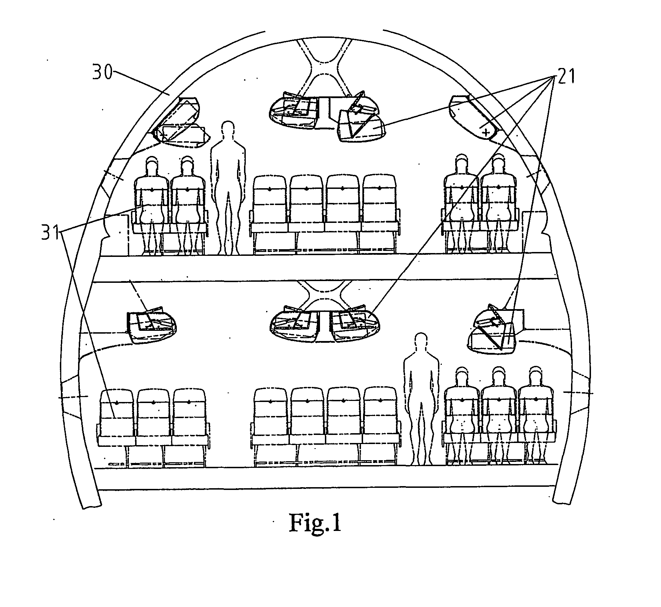

Fig. 1 zeigt einen Schnitt durch einen Teil eines Flugzeugrumpfs 30, in dem die Sitze 31 für die Passagiere angeordnet sind. Über den Sitzen 31 befinden sich die Gepäckablagebehälter 21, welche für eine leichtere Be- und Entladung verschwenkbar oder absenkbar angeordnet sein können.

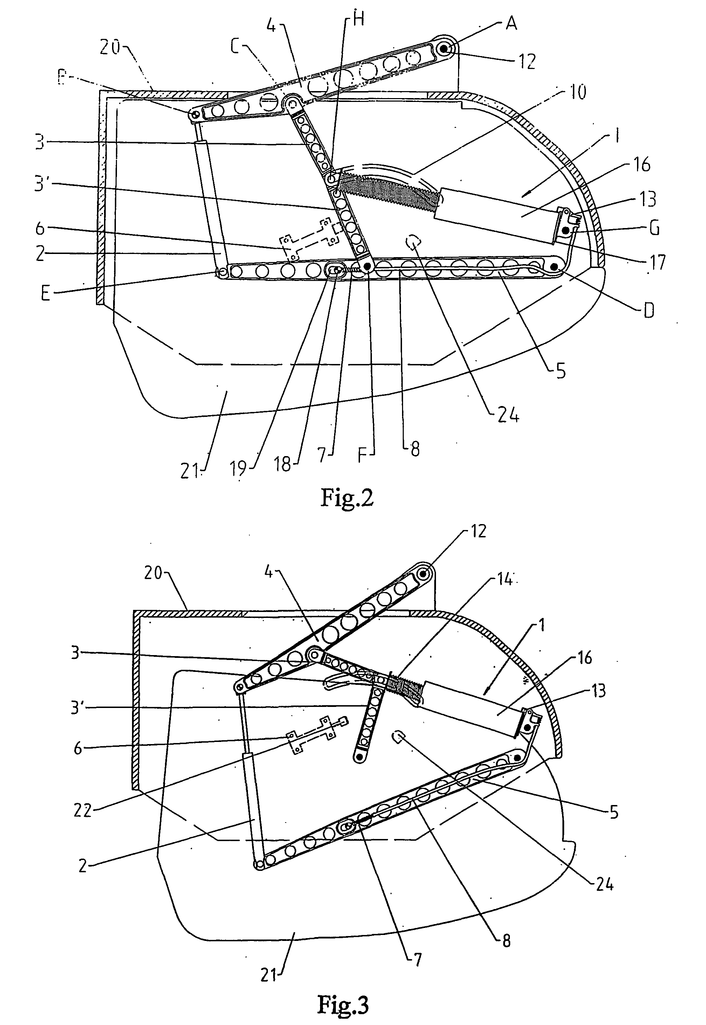

Fig. 2 zeigt einen absenkbaren Gepäckablagebehälter 21, der mit der erfindungsgemäßen Aufhängevorrichtung ausgestattet ist. Der Behälter 21 ist über die Aufhängevorrichtung mit einem feststehenden Strukturbauteil 20 verbunden, der beispielsweise mit dem Rumpf eines Flugzeuges od. dgl. verbunden ist. Der absenkbare Behälter 21 ist vorzugsweise muldenförmig ausgebildet. Zwischen dem Strukturbauteil 20 und einer Seitenwand des Behälters 21 ist die Aufhängevorrichtung vorzugsweise beidseitig des Behälters angeordnet. Die Aufhängevorrichtung besteht beispielsweise aus einem oberen Lenker 4 und einem unteren Lenker 5. Der obere Lenker 4 ist mit einem Ende (Drehpunkt A) am Strukturbauteil 20 oder einem daran angeschlossenen Element montiert, und mit dem anderen Ende (Drehpunkt B) drehbar am Behälter 21 befestigt. Der untere Lenker 5 ist mit einem Ende (Drehpunkt D) mit dem Strukturbauteil 20 verbunden und mit dem anderen Ende (Drehpunkt E) über ein Dämpfungselement 2 mit dem mit dem Behälter 21 verbundenen Ende des oberen Lenkers 4 verbunden. Am Drehpunkt C des oberen Lenkers 4 ist ein Teil 3 eines Kniehebels angelenkt, an dessen Ende am Drehpunkt H das Federelement 1 angreift. Das Federelement 1 ist an seinem anderen Ende am Drehpunkt G mit dem Strukturbauteil 20 verbunden. Das eine Ende des Kniehebelteils 3 ist mit dem weiteren Teil 3' des Kniehebels am Drehpunkt H gelenkig verbunden, dessen anderes Ende am Drehpunkt F gelenkig mit dem Behälter 21 verbunden ist. Der Kniehebelteil 3' bewirkt eine Führung der Aufhängevorrichtung während der Absenkung des Behälters 21. Zusätzlich kann eine Führungskulisse 10, beispielsweise in einer mit dem Strukturbauteil 20 verbundenen Wand, angeordnet sein, welche eine seitliche Auslenkung während der :Bewegung des Gepäckablagebehälters 21 ausschließt. Die Führungskulisse 10 ist entsprechend der Bewegung des Endes des Federelements 1 gestaltet. Zur Dämpfung der Bewegung während des Verschließens des Gepäckablagebehälters 21 kann ein zusätzlicher Dämpfer 6 angeordnet sein, der beispielsweise auf den unteren Kniehebelteil 3' wirkt und die Bewegung des Behälters 21 kurz vor dem Verschließen dämpft. Der Dämpfer 6 ist am Strukturbauteil 20 angeordnet. Der Dämpfer 6 kann auch auf einen anderen beweglichen Teil der Aufhängevorrichtung wirken. Das Federelement 1 ist beispielsweise durch eine Schraubenfeder 14 gebildet, welche zur Verhinderung einer seitlichen Auslenkung auf einem Stab 15 angeordnet ist. Über der Schraubenfeder 14 ist eine Hülse 16 angeordnet, welche einen Flansch 17 aufweist, über den die Hülse 16 mit Hilfe eines Hakens 13 in der dargestellten Position gehalten wird. Erfindungsgemäß ist am Behälter 21 eine Einrichtung zur Erfassung des Gewichts des Behälters 21 angeordnet. Im dargestellten Ausführungsbeispiel ist mit der Seitenwand des Behälters 21 ein Bolzen 18 verbunden, der durch ein Langloch 19 im unteren Lenker 5 ragt. An dem Bolzen 18 ist eine Messfeder 7 befestigt, gegen welche eine Auslenkung des Behälters 21 in geöffneter Stellung möglich ist. Die Auslenkung des Behälters 21 wird über einen Bowdenzug 8 zum Haken 13 weitergeleitet, wodurch eine Änderung der Federkraft des Federelements 1 in Abhängigkeits des Gewichts des Behälters 21 erreicht werden kann. Auf die Funktion der Einrichtung zur Erfassung des Gewichts des Behälters 21 und der Einrichtung zur Änderung der Federkraft des Federelements 1 wird weiter unten näher eingegangen. Üblicherweise werden zu beiden Seiten des Gepäckablagebehälters 21 spiegelbildlich die Aufhängevorrichtung angeordnet. Eine Synchronisierung der Bewegung kann beispielsweise über ein mit den oberen Lenkern 4 drehfest verbundenes Rohr 12 od. dgl. erreicht werden.

Fig. 3 zeigt den absenkbaren Gepäckablagebehälter 21 in teilweise geöffneter Stellung, wobei der Behälterteil 21 durch den Dämpfer 2 gedämpft nach unten abgesenkt wird. Der untere Kniehebelteil 3' ist aus seiner ursprünglichen Lage um den Drehpunkt F verschwenkt, so dass der Kolben 22 des Dämpfers 6 in seine entspannte Ruhelage ausgefahren ist.

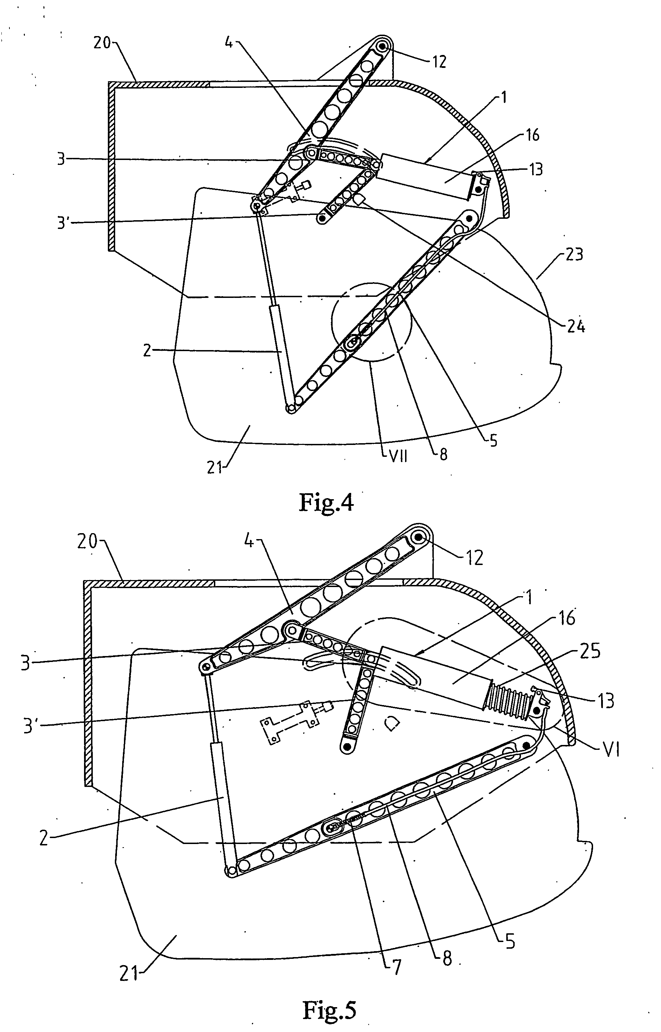

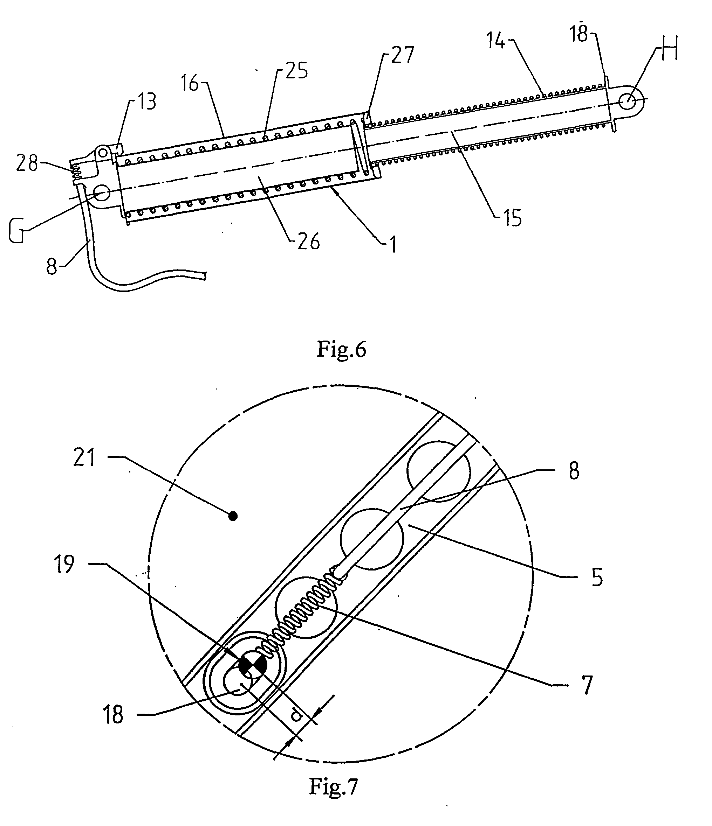

Fig. 4 zeigt nun den absenkbaren Gepäckablagebehälter in seiner geöffneten Stellung, in der über die Öffnung 23 des Behälters 21 bequem das Gepäck ein- und ausgeladen werden kann. In der geöffneten Stellung ist das Federelement 1 vollständig komprimiert, so dass die Federkraft beim Anheben des Behälters 21 ihre Kraft ausüben kann. In der dargestellten geöffneten Stellung des Behälters 21 kann der untere Kniehebelteil 3' an einen Endanschlag 24 anschlagen, der die Bewegung begrenzt. Der Endanschlag 24 kann auch an einer anderen Stelle des Strukturbauteils 20 angeordnet sein und auf ein anderes Element der Aufhängevorrichtung wirken. Wird nun der Behälter 21 mit Gepäckstücken beladen, tritt die erfindungsgemäße Einrichtung zur Erfassung des Gewichts des Behälters 21 in Aktion. Dazu wird auf Fig. 7 verwiesen, welche das Detail VII aus Fig. 4 in vergrößerter Darstellung zeigt. Der Behälter 21 sinkt durch das Gewicht der Gepäckstücke gegen die Federkraft der Messfeder 7 nach unten, wobei die Bewegung (Distanz d) durch das Langloch 19 im unteren Lenker 5 begrenzt wird. Über die Federkraft der Messfeder 7 kann der Grenzwert des Gewichts des Behälters 21 eingestellt werden, ab dem eine Änderung der Federkraft des Federelements 1 eintreten soll. Die Messfeder 7 kann beispielsweise über Änderung des Federwegs, beispielsweise über eine Schraube, eingestellt werden (nicht dargestellt). An den Bolzen 18, der durch das Langloch 19 ragt, ist ein Bowdenzug 8 angeschlossen, der die Auslenkung des Behälters 21 auf den Haken 13 überträgt, welcher die Hülse 16 des Federelements 1 zurückhält. Dieser Zustand ist in Fig. 5 dargestellt, bei dem der Behälter 21 gehoben wird und dabei das Federelement 1 durch Zuschaltung eines zusätzlichen Federelements 25 eine erhöhte Federkraft ausübt. Durch das Gewicht des Behälters 21 wurde der Haken 13 bewegt und die Hülse 16 freigegeben, so dass das unter der Hülse 16 angeordnete und vorgespannte weitere Federelement 25 freigegeben wird. Dadurch kann das zusätzliche Federelement 25, welches beispielsweise ebenfalls durch eine Schraubenfeder gebildet ist, zusätzlich zur Schraubenfeder 14 des Federelements 1 ihre Kraft ausüben. Dadurch wird die Bewegung des Behälters 21 in die geschlossene Stellung auch bei voller Beladung unterstützt. Wird der Gepäckablagebehälter 21 wieder geöffnet und entladen, so hebt sich der Behälter 21 nach oben und der Haken 13 hält die Hülse 16 des Federelements 1 wieder fest, so dass die Kraft der Schraubenfeder 25 keine Wirkung ausübt und lediglich die Kraft der Schraubenfeder 14 zur Geltung kommt, welche zur Unterstützung des Hebevorgangs des leeren oder leicht beladenen Behälters 21 ausreicht.

Eine Ausführungsform des erfindungsgemäßen Federelements 1 ist in Fig. 6, welche das Detail VI aus Fig. 5 in geschnittener Darstellung zeigt, wiedergegeben. Das Federelement 1 besteht aus einer Schraubenfeder 14, welche über einen Stab 15 angeordnet ist. Das eine Ende des Federelements 1 ist am Drehpunkt G mit dem Strukturbauteil 20 verbunden, während das andere Ende des Federelements 1 über den Drehpunkt H mit dem Behälter 21 verbunden ist. Somit übt die Schraubenfeder 14 eine Kraft vom Drehpunkt G in Richtung des Drehpunkts H aus. Über der Schraubenfeder 14 ist eine Hülse 26 angeordnet, welche eine Länge entsprechend dem Hub des Federelements 1 aufweist. Über der Hülse 26 ist die zusätzliche Schraubenfeder 25 angeordnet, welche von der Hülse 16 abgedeckt ist. Die Schraubenfeder 25 wird vom Ende 27 der Hülse 16 in komprimierter Form gehalten, so lange der Haken 13 die Hülse 16 über den Flansch 17 zurückhält. Nach Betätigung des Hakens 13 wird die Hülse 16 gegen das Ende des Federelements 1 gedrückt und die Schraubenfeder 25 kann ihre Kraft in Richtung des Drehpunkts H entfalten. Damit das Ende 27 der Hülse 16 nicht über den Drehpunkt H hinausgehen kann, ist ein erweiterter Flansch 28 am Stab 15 angeordnet. Beim Öffnen des Gepäckablagebehälters 21 wird das Federelement 1 zusammengedrückt, worauf der Flansch 17 der Hülse 16 wieder hinter den Haken 13 gepresst wird, der im Falle eines leeren oder leicht beladenen Behälters 21 die Hülse 16 wieder zurückhält. Zu diesem Zweck muss der Haken 13 beispielsweise mit Hilfe einer Schraubenfeder 28 vorgespannt werden. Obgleich die dargestellte koaxiale, zweistufige Anordnung des Federelements 1 Vorteile aufweist, kann auch eine parallele Anordnung zweier oder mehrerer Federelemente zur Erfüllung der erfindungsgemäßen Aufgabe dienen.

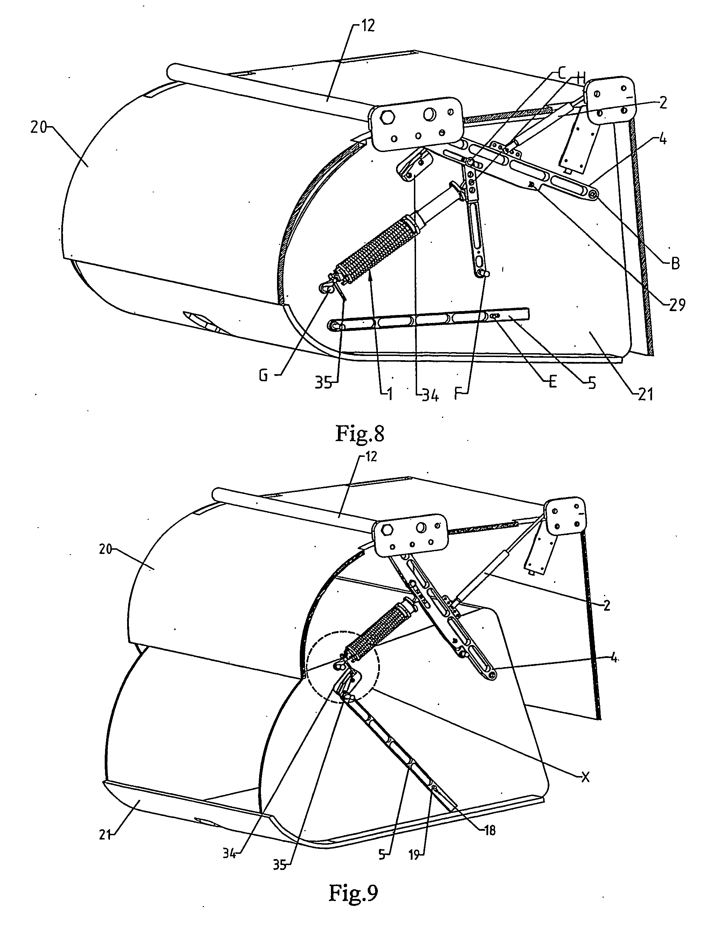

Fig. 8 zeigt eine perspektivische Ansicht einer weiteren Ausführungsform des Überkopfgepäckablagebehälters 21 in geschlossener Stellung. Dabei ist der feststehende Strukturbauteil 20 zur besseren Ansicht auf die Aufhängevorrichtung ohne Seitenwände dargestellt. Das Dämpfungselement 2 ist in dieser Ausführungsvariante zwischen dem oberen Lenker 4 und einem Element zur Verbindung mit dem Rumpf des Flugzeugs od. dgl. verbunden. Die Aufhängevorrichtung besteht wie bei der Ausführungsform gemäß den Fig. 2 bis 5 aus einem oberen Lenker 4 und einem unteren Lenker 5, zwischen deren Enden (Drehpunkte D und E) ein Dämpfungselement 2 angeordnet ist. Im Gegensatz zur Ausführungsform gemäß den Fig. 2 bis 5 ist am Drehpunkt C des oberen Lenkers 4 kein Kniehebel sondern ein starrer Hebel 29 angeordnet, der mit seinem anderen Ende am Drehpunkt F gelenkig mit der Seitenwand 33 des feststehenden Strukturbauteils 20 verbunden ist. Am Drehpunkt H des Hebels 29 greift das eine Ende des Federelements 1 an, welches mit seinem anderen Ende am Drehpunkt G mit der Seitenwand 33 des Strukturbauteils 20 verbunden ist. Erfindungsgemäß ist an der Seitenwand des Behälters 21 eine Schaltkulisse 34 angeordnet, welche in geöffneter Stellung des Gepäckablagebehälters 21 entsprechend Fig. 9 mit einem Schalthebel 35 des Federelements 1 zusammenwirkt und eine Umschaltung des Federelements 1 in Abhängigkeit des Gewichts des Behälters 21 bewirkt. Zu diesem Zweck ist der bewegliche Behälter 21 in seiner geöffneten Stellung in seiner Lage gegen die Federkraft einer Messfeder verschiebbar angeordnet, wodurch das Gewicht des Behälters 21 erfasst werden kann. Die Verschiebbarkeit des Behälters 21 in Abhängigkeit des Gewichts der Beladung kann entsprechend Fig. 7 durch Bewegung eines Bolzens 18 in einem Langloch 13 des Lenkers 5 erfolgen. Die gewichtsbedingte Lageveränderung des Behälters 21 in vorgegebenen Grenzen kann, aber auch auf andere Art und Weise realisiert werden.

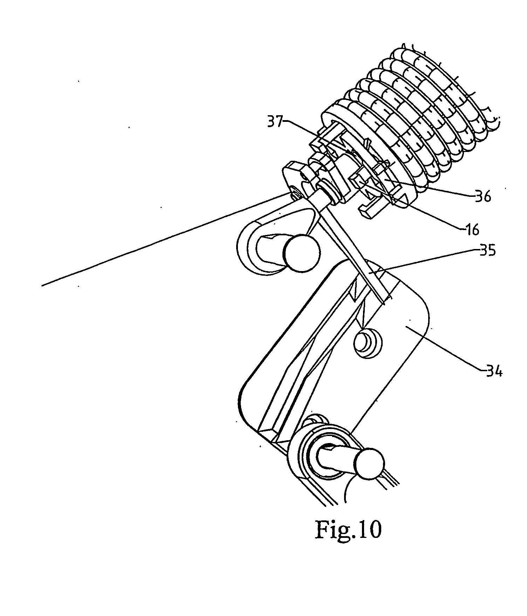

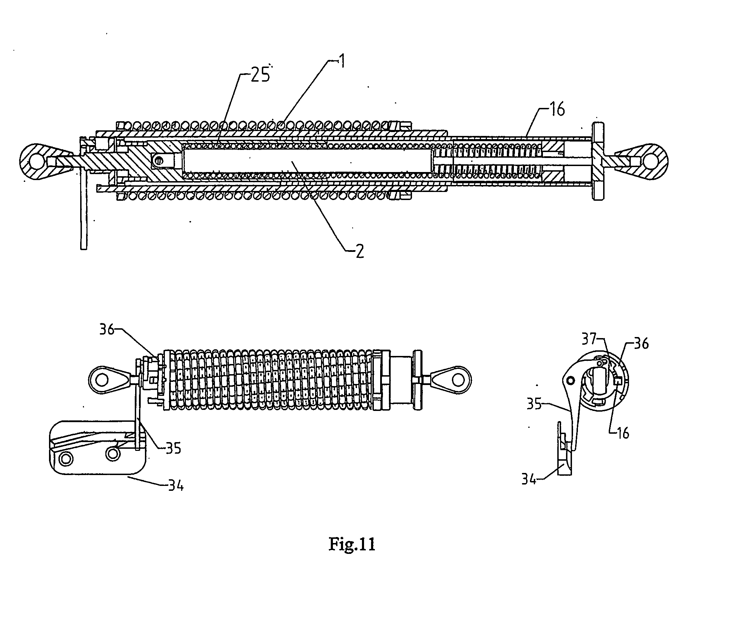

Fig. 10 zeigt das Detail X gemäß Fig. 9 in vergrößerter Darstellung. Entsprechend der gewichtsbedingten Lageveränderung des Behälters 21 wird die an der Seitenwand des Behälters 21 befestigte Schaltkulisse 34 bewegt, wobei die Richtung dieser Bewegung beispielsweise durch die Führung des Bolzens 18 im Langloch 19 im unteren Lenker 5 bestimmt wird. Auf der Schaltkulisse 34 liegt das Ende des Schalthebels 35 auf und wird vorzugsweise durch eine nicht dargestellte Feder, beispielsweise eine Torsionsfeder, an die Schaltkulisse 34 gedrückt. Mit dem Schalthebel 35 ist drehfest eine Scheibe 36 verbunden, welche entsprechend gestaltete Ausnehmungen 37 aufweist, über die bei Verdrehung der Scheibe 36 das zumindest eine zusätzliche Federelement 25 zurückgehalten oder freigegeben werden kann bzw. zwischen den Federelementen 1 und 25 umgeschaltet werden kann. Im dargestellten Ausführungsbeispiel wird dies durch eine um das zusätzliche Federelement 25 angeordnete Hülse 16 erzielt, deren Fortsatz durch die Ausnehmung 37 der Scheibe 36 ragt und bei entsprechender Winkelstellung der Scheibe 36 zurückgehalten oder freigegeben werden kann. Die Funktion des Federelements 1 zusammen mit dem zusätzlichen Federelement 25 wird anhand der Fig. 11 bis 13 näher erläutert.

Fig. 11 zeigt die Ausführungsform, bei welcher der Gepäckbehälter 21 leer oder nur leicht beladen ist und somit nicht durch das Gewicht der Beladung nach unten gedrückt wird. Somit befindet sich der Schalthebel 35 auf der obersten Stufe der Schaltkulisse 34. Die Scheibe 36, welche mit dem Schalthebel 35 drehfest verbunden ist, gibt in dieser Winkelposition die Hülse 16 um das Federelement 25 frei, so dass dieses seine Kraft zur Unterstützung der Bewegung des Behälters 21 in seine geschlossene Stellung ausüben kann. Dies wird dadurch erreicht, dass das durch die Ausnehmung 37 in der Scheibe 36 ragende Ende der Hülse 16 freigegeben wird und durch die Federkraft der Feder 25 von der Scheibe 36 wegbewegt wird. Dies kann aus der Schnittzeichnung der Federelemente 1, 25 erkannt werden. Das Federelement 1, welches koaxial zum Federelement 25 angeordnet ist, wird über Verbindungen mit der Platte 38 durch die Stellung der Scheibe 36 zurückgehalten, so es keine Druckkraft ausüben kann. In Summe wirkt somit lediglich die Druckkraft des kleineren Federelements 25.

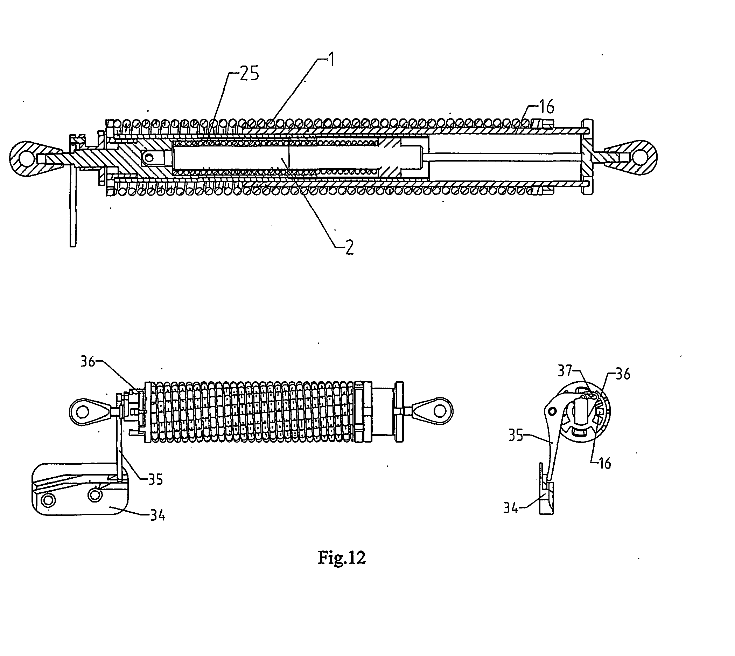

Fig. 12 zeigt den Fall eines mittelmäßig beladenen Behälters 21, wodurch dieser entgegen der Kraft einer nicht dargestellten Messfeder in seiner Lage nach unten bewegt wird. Dadurch führt auch die Schaltkulisse 34 eine entsprechende Bewegung aus, so dass der Schalthebel 35 auf der tieferliegenden Stufe der Schaltkulisse 34 zu liegen kommt und dadurch eine Drehbewegung der mit dem Schalthebel 35 verbundenen Scheibe 36 bewirkt. Aufgrund dieser Drehbewegung der Scheibe 36, welche im dargestellten Ausführungsbeispiel etwa 25° im Uhrzeigersinn beträgt, wird die Hülse 16 um das Federelement 25 festgehalten, so dass das Federelement 25 keine Kraft ausüben kann. Dafür wird entsprechend der Winkellage der Scheibe 36 das Federelement 1 freigegeben und kann somit seine Kraft ausüben. Bei dieser mittleren Beladung des Behälters 21 wirkt somit nur das größere Federelement 1.

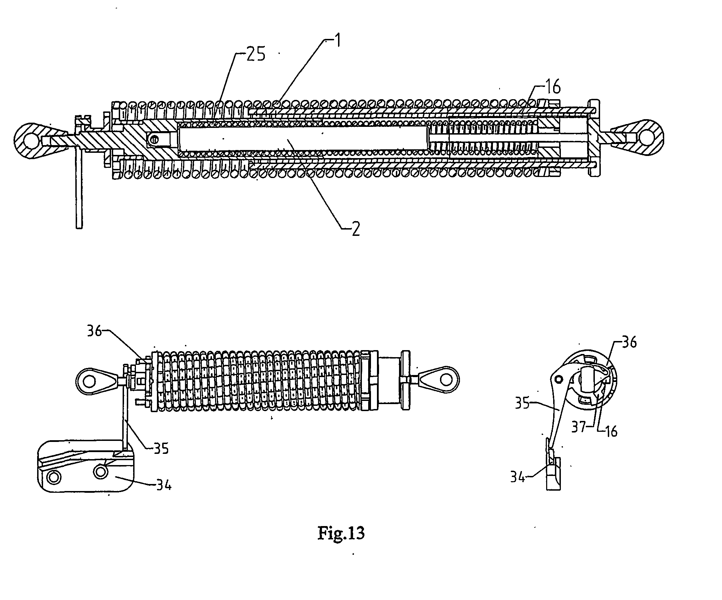

Fig. 13 zeigt den Zustand eines vollbeladenen Behälters 21, bei dem die Schaltkulisse 34 ein noch weiteres Stück bewegt wird, so dass der Schalthebel 35 auf der untersten Stufe der Schaltkulisse zu liegen kommt, so dass die Scheibe 36 eine weitere Drehbwegung im Uhrzeigersinn vollzieht. Gegenüber der Lage gemäß Fig. 11 ist die Scheibe 36 im dargestellten Ausführungsbeispiel um etwa 50° im Uhrzeigersinn verdreht. In dieser Position sind entsprechende Ausnehmungen 37 an der Scheibe 36 angeordnet, welche sowohl die Hülse 16 des Federelements 25 als auch die entsprechenden Rückhalteelemente des Federelements 1 freigeben, so dass beide Federelemente 1, 25 ihre Kraft ausüben können. In diesem vollbeladenen Zustand des Behälters 21 wird somit die volle Kraft zur Unterstützung der Schließbewegung entfaltet. Anstelle der in den Fig. 9 bis 13 dargestellten dreistufigen Konstruktion kann natürlich auch eine zweistufige oder mehrstufige Anordnung realisiert werden. Ebenso ist es unerheblich, ob das Federelement 1 um dem Federelement 25 oder umgekehrt angeordnet ist. Eine Umschaltung zwischen den einzelnen Stufen kann immer nur im geöffneten Zustand des Behälters 21 erfolgen, in dem alle Rückhalteeinrichtungen der Federelemente 1 und 25 durch die Öffnungen 37 in der Scheibe 36 ragen und somit eine Verriegelung oder Freigabe der Federelemente 1 oder 25 zulässig ist.

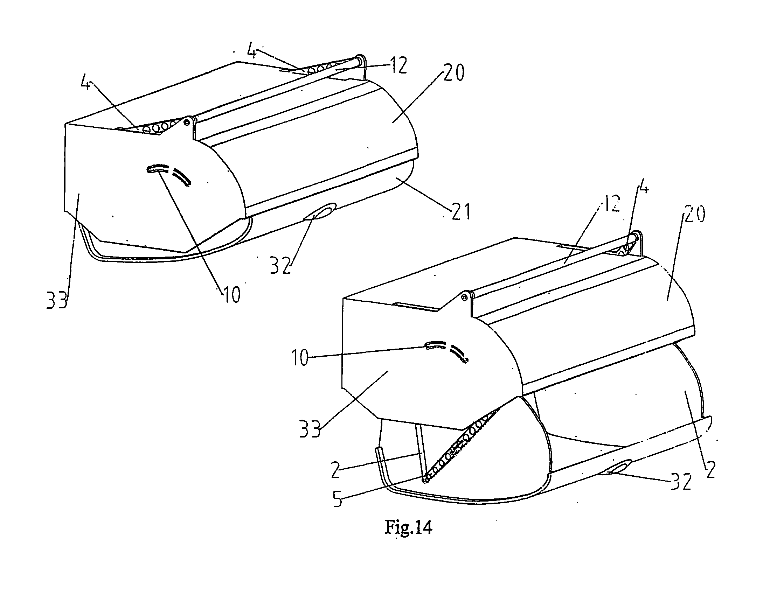

Fig. 14 zeigt schließlich den Gepäckablagebehälter 21, welcher zum Zwecke der Absenkbarkeit mit der erfindungsgemäßen Aufhängevorrichtung versehen ist. Im linken Bild ist der Behälter 21 in seiner geschlossenen Stellung dargestellt, in der er gegen einen Strukturbauteil 20 gedrückt wird und über eine Verschlusseinrichtung 32 fixiert wird. Die Aufhängevorrichtungen sind zwischen einer Seitenwand 33 des feststehenden Strukturbauteils 20 und der Seitenwand des Behälters 21 angeordnet.Die beidseitig angeordneten oberen Lenker 4 sind ersichtlich. Zur Synchronisation der Absenkbewegung sind die Lenker 4 drehfest über ein Rohr 12 od. dgl. miteinander verbunden. Das rechte Bild zeigt den abgesenkten Behälter 21, wodurch die Öffnung 23 zur Be- und Entladung des Behälters 21 mit Gepäckstücken freigegeben wird. Der untere Lenker 5 und ein Teil des Dämpfungselements 2 sind ersichtlich.

Aufgrund der Robustheit und Wartungsfreiheit wird einer rein mechanischen Lösung der Vorzug gegeben. Allerdings sei bemerkt, dass auch eine elektronische Einrichtung zur Erfassung des Gewichts des Behälter 21 und auch eine elektronische Einrichtung zur Änderung der Federkraft des Federelements 1 vorgesehen werden könnte. Allerdings ist für eine elektronische Lösung eine Spannungsversorgung einerseits und eine Verkabelung der Elemente andererseits notwendig, was wiederum zu einem erhöhten Gewicht, aber auch zu einem erhöhten Wartungs- und Installationsaufwand führt. Weiters sei bemerkt, dass prinzipiell verschiedenste Federelemente zur Anwendung kommen können, wobei allerdings Schraubenfedern aufgrund derer Einfachheit und Robustheit der Vorzug gegeben wird. Pneumatische Federzylinder haben den Nachteil, dass sie auf Änderungen der Temperatur reagieren und somit ihre Kraftwirkung von der Temperatur abhängig ist, was insbesondere bei Flugzeugen, die hohen Temperaturschwankungen ausgesetzt sind, nachteilig sein kann. Die Elemente der dargestellten Aufhängevorrichtung können aus Leichtmetall, wie Aluminium oder Magnesium, hergestellt sein, oder auch aus Kunststoff, vorzugsweise faserverstärktem Kunststoff, aufgebaut werden.

### Beschreibung für folgende Vertragsstaaten: BE, BG, CH, CY, CZ, DK, EE, ES, FI, GR, IE, LI, LU, MC, NL, PT, SK, TR

Die Erfindung betrifft eine Aufhängevorrichtung für absenkbare Gepäckablagebehälter mit zumindest einem Federelement zur Unterstützung der Bewegung des Behälters in seine geschlossene Stellung entgegen der Schwerkraft und zumindest einem Dämpfungselement zur Dämpfung der Bewegung des Behälters in seine geöffnete Stellung und mit einer Einrichtung zur Erfassung des Gewichts des Behälters.

Weiters betrifft die Erfindung einen absenkbaren Gepäckablagebehälter mit einer derartigen Aufhängevorrichtung, wobei zwischen dem Behälter und einem feststehenden Strukturbauteil seitlich des Behälters zumindest ein Federelement zur Unterstützung der Bewegung des Behälters in seine geschlossene Stellung entgegen der Schwerkraft und zumindest ein Dämpfungselement zur Dämpfung der Bewegung des Behälters in seine geöffnete Stellung angeordnet ist, wobei mit dem Behälterteil eine Einrichtung zur Erfassung des Gewichts des Behälters verbunden ist.

Die vorliegende Erfindung bezieht sich hauptsächlich auf Gepäckablagebehälter, wie sie in.Passagierflugzeugen verwendet werden. Sie ist jedoch auch auf Gepäckablagebehälter, beispielsweise in Schienenfahrzeugen oder anderen zum Passagiertransport eingerichteten Transportmittel, anwendbar.

Gepäckablagebehälter in Passagierflugzeugen bestehen üblicherweise aus über den Köpfen der Passagiere montierten Fächern, welche eine Öffnung aufweisen, die beispielsweise mit einer verschwenkbaren Klappe verschließbar ist. Um ein Gepäckstück in den Behälter zu legen oder dieses zu entnehmen, muss der Passagier die Klappe öffnen und sein Gepäckstück über die Öffnung in den Behälter heben bzw. aus diesem entnehmen. Dies bedarf insbesondere bei schweren Gepäckstücken eines erheblichen Kraftaufwands, welcher besonders für kleine oder schwache Personen ein Hindernis darstellen kann.

Zur Verbesserung der Situation wurden insbesondere in sehr großen Passagierflugzeugen, welche auch eine größere Raumhöhe aufweisen, Gepäckablagebehälter entwickelt, welche zum Zwecke des Beladens und Entladens nach unten verschwenkt oder abgesenkt werden können. Derartige Verschwenk- oder Absenkmechanismen verfügen üblicherweise über zumindest ein Dämpfungselement, welches die Bewegung des Behälters nach unten dämpft, so dass der Behälter beim Öffnen nicht abrupt nach unten fällt und zu Verletzungen führen kann. Zusätzlich verfügt ein derartiger Mechanismus über zumindest ein Federelement, welches die Bewegung des Behälters entgegen der Schwerkraft in seine geschlossene Stellung unterstützt und somit dem Passagier ein Schließen des beladenen Behälters erleichtert. Diese Dämpfungs- und Federelemente werden so abgestimmt, dass sie für einen durchschnittlich belasteten Gepäckablagebehälter eine ausreichende Dämpfung sowie eine ausreichende Unterstützung der Bewegung in seine geschlossene Stellung ermöglichen. Weicht die Beladung des Behälters von diesem Durchschnittswert, auf den die Dämpfungs- und Federelemente abgestimmt wurden, ab, funktioniert der Mechanismus nicht wie gewünscht. So würde ein unbeladener Behälter nur sehr schwer entgegen der Wirkung des Dämpfungselements in seine offene Stellung gebracht werden können, so dass das Öffnen des Behälters nur durch Ausübung einer relativ hohen Zugkraft ermöglicht würde. Andererseits könnte ein überbeladener Behälter auch nur schwer und unter körperlichem Einsatz gegen die Schwerkraft in seine geschlossene Stellung gebracht werden. Verstärkt wird das Problem dadurch, dass für zukünftige, für immer mehr Passagiere ausgelegten Flugzeuge die Gepäckablagebehälter immer größer gebaut werden und immer höheren Belastungen standhalten müssen. Derartige Gepäckablagebehälter können beispielsweise für Belastungen zwischen 0 und 60 kg ausgelegt sein. Dementsprechend ist es nahezu unmöglich, den Verschwenk- oder Absenkmechanismus für einen derartigen Gepäckablagebehälter für alle Belastungen optimal auszulegen.

Die DE 41 30 644 A1 zeigt eine Überkopfgepäckablage, deren Bedienung nur eine geringe und von der Zuladung und Stellung des beweglichen Behälters weitgehend unabhängige Betätigungskraft erfordert. Zu diesem Zweck ist die zur Unterstützung des Schließvorganges vorgesehene Gasfeder verschwenkbar angeordnet, so dass der Anlenkpunkt an den Oberhebel und somit das auf den Oberhebel wirkende Drehmoment, welches den Schließvorgang des Behälters unterstützt, veränderbar ist. Das Gewicht des beweglichen Behälters der Überkopfgepäckablage wird über einen Wägezapfen erfasst, der auf einen mit dem Federelement verbundenen Wägehebel einwirkt. Je nach Gewicht der Beladung des Behälters wird die Gasfeder mehr oder weniger verschwenkt und dadurch die Gewichtskraft des Behälters kompensiert. Damit während des Schließvorgangs des Behälters die Gasfeder nicht in ihre ursprüngliche Lage zurückgeschwenkt werden kann, ist eine Blockiereinrichtung vorgesehen, welche über einen Bowdenzug aktiviert wird, sobald zur Einleitung des Schaltvorganges von unten ein Druck auf eine Arretierungsplatte an der Unterseite des verschwenkbaren Behälters ausgeübt wird. Zusätzlich wird ab Erreichen einer gewissen Höhe des absenkbaren Behälters die Blockiereinrichtung automatisch aktiviert, so dass diese auch unabhängig vom Zustand des Bowdenzugs wirkt.

Die DE 43 35 151 A1 zeigt ebenfalls eine Überkopfgepäckablage mit einem absenkbaren Behälter, bei der zur Unterstützung des Schließvorgangs ein weiteres Federelement in Abhängigkeit der Beladung des Behälters zuschaltbar ist. Ohne oder bei geringer Beladung des Behälters wird ein mit dem zusätzlichen Federelement verbundener Unterstützungshebel blockiert, so dass das zusätzliche Federelement keine zusätzliche Kraft auf den Behälter ausübt. Überschreitet die Beladung des Behälters einen gewissen Grenzwert, der durch eine gewichtsbedingte Auslenkung des beweglichen Behälters erfasst wird, dann kann die Blockierung des Unterstützungshebels durch einen aktiven Druck von unten auf eine Auslöseplatte am beweglichen Behälterteil freigegeben werden und das zusätzliche Federelement wirkt zur Unterstützung des Schließvorgangs. Dabei ist zwischen der Auslöseplatte und dem Unterstützungshebel ein Bowdenzug zur Übertragung des Drucks auf die Auslöseplatte auf dem Blockierhaken angeordnet. Für eine Zuschaltung der Unterstützungsfeder ist daher ein aktives Zutun des Passagiers zwingend erforderlich, wodurch die Bedienung erschwert wird. Die zwingend erforderliche Verbindung zwischen der Auslöseplatte und dem Blockierhaken der Unterstützungsgasfeder erhöht auch den Montageaufwand und den Wartungsaufwand sowie die Fehleranfälligkeit.

Die DE 196 17 657 A1 beschreibt eine Aufhängevorrichtung für absenkbare Gepäckablagebehälter der gegenständlichen Art, wobei die Federelemente an das Gewicht des Behälters angepasst werden, indem die Momentenarme der Federelemente verschoben werden.

Ziel der vorliegenden Erfindung ist daher die Schaffung einer Aufhängevorrichtung für absenkbare Gepäckablagebehälter, welche auch bei unterschiedlichen Belastungen des Behälters das Heben des Behälters in seine geschlossene Stellung unterstützt und gleichzeitig bei unterschiedlichen Belastungen des Behälters die Bewegung beim Öffnen des Behälters in ausreichendem Maße dämpft. Beispielsweise soll die erforderliche Kraft zum Öffnen des Behälters im leeren Zustand 70 N und die erforderliche Kraft zum Schließen des voll beladenen Behälters 200 N nicht übersteigen. Zudem soll die Aufhängevorrichtung möglichst einfach, leicht, robust und wartungsfrei ausgebildet sein. Weiters soll die Aufhängevorrichtung eine einfache Bedienbarkeit des absenkbaren Gepäckablagebehälters gewährleisten. Die gewichtsbedingte Zuschaltung bzw. Umschaltung des zumindest einen zusätzlichen Federelements soll automatisch ohne aktives Zutun des Passagiers erfolgen. Eine derartige Aufhängevorrichtung soll beispielsweise den in der Flugzeugindustrie üblichen und vorgeschriebenen Belastungen standhalten. Beispielsweise werden für die Betätigung derartiger Gepäckablagebehälter Lebenszeiten von 200.000 Öffnungszyklen gefordert.

Eine weitere Aufgabe der Erfindung besteht in der Schaffung eines absenkbaren Gepäckablagebehälters, welcher auch für unterschiedliche Belastungen leicht bedienbar ist und möglichst einfach, leicht und robust aufgebaut ist und zudem möglichst kostengünstig herstellbar und wartungsfrei ist.

Gelöst wird die erste erfindungsgemäße Aufgabe dadurch, dass zumindest ein in Abhängigkeit des erfassten Gewichts des Behälters zuschaltbares bzw. umschaltbares zusätzliches Federelement und eine Rückhalteeinrichtung zur Fixierung des zumindest einen zusätzlichen Federelements vorgesehen ist, wobei die Rückhalteeinrichtung durch die Einrichtung zur Erfassung des Gewichts des Behälters betätigbar ist. Die vorliegende Erfindung zeichnet sich durch eine direkte Verbindung zwischen der Einrichtung zur Erfassung des Gewichts des Behälters und der Rückhalteeinrichtung aus, so dass automatisch bei Überschreiten eines bestimmten Gewichts ein oder mehrere zusätzliche Federelemente zugeschaltet bzw. umgeschaltet werden können. Die Erfindung zeichnet sich durch einen geringen Montageaufwand, Wartungsaufwand und eine geringe Fehleranfälligkeit aus. Durch diese Konstruktion kann eine zwei- oder mehrstufige Steuerung der Federkraft realisiert werden. In der Regel wird eine zweistufige Steuerung der Federkraft für einwandfreie Funktion der Bedienung des Behälters ausreichen. Der Wert des Gewichts des Behälters, ab dem das zusätzliche Federelement zugeschaltet wird, wird nach den entsprechenden Anforderungen gewählt und beispielsweise mit der Hälfte der höchstzulässigen Belastung festgelegt. Bei Belastungen des Behälters über diesem Grenzwert unterstützt das zumindest eine zusätzliche Federelement das Heben des beladenen Behälters und gewährleistet somit eine optimale Bedienung. Dadurch wird eine optimale Bedienung des absenkbaren Gepäckablagebehälters auch für unterschiedliche Belastungen gewährleistet.

Um die geforderte Robustheit zu erzielen, sind das Federelement sowie das zumindest eine zusätzliche Federelement durch mechanische Schraubenfedern gebildet, welche vorzugsweise koaxial zueinander angeordnet sind. Somit wird eine Serienschaltung zumindest zweier Federelemente gebildet, die durch die koaxiale Anordnung denselben Angriffs- und Wirkpunkt aufweisen. Selbstverständlich ist auch eine parallele Anordnung mehrerer Federelemente möglich. Darüber hinaus sind koaxial zueinander angeordnete Schraubenfedern besonders platzsparend und kompakt.

Gemäß einem weiteren Merkmal der Erfindung ist vorgesehen, dass das zumindest eine zusätzliche Federelement durch eine Hülse umgeben ist, welche durch die Rückhalteeinrichtung fixierbar ist, so dass das zumindest eine zusätzliche Federelement in gespannter Lage fixierbar ist. Somit wird durch die Rückhalteeinrichtung im Falle eines leeren Behälters bzw. eines unter dem Grenzwert beladenen Behälters die zumindest eine zusätzliche Federkraft eines Federelements gespeichert und bei Bedarf durch Betätigung der Rückhalteeinrichtung freigegeben.

Die Rückhalteeinrichtung kann durch einen bewegbaren Haken od. dgl. gebildet sein, der beispielsweise in einen Flansch an der Hülse eingreift und somit diese und die darunter angeordnete Feder in gespannter Lage fixiert.

Alternativ dazu kann die Rückhalteeinrichtung auch durch eine drehbar gelagerte Scheibe gebildet sein, wobei die Drehung der Scheibe durch das erfasste Gewicht des Behälters beeinflussbar ist und dadurch das zumindest eine zusätzliche Federelement zuschaltbar ist. Durch die drehbar gelagerte Scheibe kann das zumindest eine zusätzliche Federelement verriegelt werden, wenn das Gewicht des Behälters unter einem bestimmten Grenzwert liegt und freigegeben werden, wenn das Gewicht des Behälters über einem bestimmten Grenzwert liegt. Bei Anordnung mehrerer zusätzlicher Federelemente kann durch entsprechende Verdrehung der Scheibe die Zuschaltung einzelner zusätzlicher Federelemente oder Kombinationen davon erreicht werden.

Wenn die Scheibe drehfest mit einem Schalthebel verbunden ist und am Behälter eine Schaltkulisse mit zumindest zwei unterschiedlichen durch das Gewicht des Behälters beeinflussbaren Schaltpositionen angeordnet ist, auf welcher der Schalthebel aufliegt, kann eine gewichtsabhängige Zuschaltung oder Umschaltung des zumindest einen zusätzlichen Federelements erfolgen. Die Schaltkulisse zwingt den Schalthebel in eine entsprechende Stellung, wodurch die drehfest mit dem Schalthebel verbundene Scheibe eine entsprechende Stellung einnimmt, so dass dem Gewicht des Behälters entsprechend das zumindest eine zusätzliche Federelement freigegeben oder blockiert wird.

Um ein exaktes Zuschalten des zumindest einen Federelements zu erzielen, wird der Schalthebel vorzugsweise mittels einer Feder od. dgl. gegen die Schaltkulisse gedrückt. Dies kann beispielsweise mit einer Torsionsfeder geschehen.

Eine einfache Realisierung der Schaltkulisse wird durch zumindest zwei Raststufen unterschiedlicher Stufentiefe gebildet, welche in geöffneter Stellung des Behälters mit einem Schalthebel des Federelements zusammenwirkt. Durch gewichtsbedingte Verschiebung des Behälters wird eine Umschaltung des Federelements bewirkt. Die maximale Verschiebung des Behälters legt die Verschiebung der Schaltkulisse fest, die je nach Anzahl der Schaltstufen unterteilt wird. Üblicherweise werden zwei Schaltstufen ausreichen, wobei in einer Schaltposition das eine zusätzliche Federelement blockiert wird und in der anderen Schaltposition freigegeben wird.

Gemäß einem weiteren Merkmal der Erfindung ist vorgesehen, dass die Einrichtung zur Erfassung des Gewichts des Behälters durch eine gegen eine Messfeder auslenkbare Lagerung des Behälters in seiner geöffneten Stellung gebildet ist. Diese rein mechanische Konstruktion ist durch besondere Einfachheit und Robustheit ausgezeichnet. Dabei muss das Gewicht des Behälters nicht stufenlos erfasst werden, sondern lediglich die Überschreitung eines vorbestimmten Grenzwerts erfasst werden. Dabei wird die Messfeder so ausgelegt, dass sie bei Überschreitung der Beladung des Behälters über den vorgegebenen Messwert um eine vorgegebene Auslenkung ausgedehnt werden kann.

Die Lagerung kann durch ein mit dem Behälter verbundenes Element gebildet werden, welches Element beispielsweise ein Bolzen, in einer Führung, beispielsweise einem Langloch, angeordnet und mit einem Ende der Messfeder verbunden ist. Durch das Langloch wird die Auslenkung des Behälters begrenzt.

Wenn das mit dem Behälter verbundene Element mit einem Ende des Bowdenzugs od. dgl. verbunden ist, dessen anderes Ende mit der Rückhalteeinrichtung des zumindest einen zusätzlichen Federelements verbunden ist, so dass bei gewichtsbedingter Auslenkung des Behälters die Rückhalteeinrichtung lösbar ist, kann eine einfache gewichtsgesteuerte Änderung der Federkraft auf rein mechanischem Weg realisiert werden. Dies stellt eine robuste und einfache Realisierungsmöglichkeit für die Verbindung der Einrichtung zur Erfassung des Gewichts und der Einrichtung zur Änderung der Federkraft des Federelements dar.

Um die Absenkvorrichtung an die jeweiligen Anforderungen anpassen zu können, ist der Grenzwert des Gewichts des Behälters vorzugsweise durch eine verstellbare Ausführung der Messfeder einstellbar. Durch die Einstellbarkeit kann auch allfälligen Ermüdungserscheinungen der Einrichtung zur Messung des Gewichts des Gepäckablagebehälters entgegengewirkt werden. Die Verstellbarkeit der Messfeder kann durch Änderung des Federwegs oder andere Methoden erfolgen.

Wenn eine Einrichtung zur Änderung der Federkraft des Federelements und bzw. oder des zumindest einen zusätzlichen Federelements vorgesehen ist, kann eine Anpassung an die jeweiligen Bedingungen, wie z.B. an das Leergewicht des Behälters, oder auch eine Nachjustierung der Federelemente erfolgen.

Dabei kann die Einrichtung zur Änderung der Federkraft des Federelements und bzw. oder des zumindest einen zusätzlichen Federelements durch eine Schraube zur Veränderung der Vorspannung des Federelements und bzw. oder des zumindest einen zusätzlichen Federelements gebildet sein. Durch Verstellung der Schraube wird bei mechanischen Schraubenfedern der Federweg und damit die Vorspannung der Feder eingestellt.

Gemäß einem weiteren Merkmal der Erfindung ist eine Einrichtung zum Halten des Behälters in seiner geöffneten Stellung vorgesehen, welche beispielsweise durch eine federnd gelagerte Kugel gebildet sein kann, die in geöffneter Stellung des Behälters in eine entsprechende Rastvertiefung eingreift. Dadurch kann der Behälter zweckmäßigerweise zum Be- und Entladen in seiner geöffneten Position gehalten werden und dadurch die Handhabung erleichtert werden. Dabei muss die Halteeinrichtung entsprechend positioniert sein und die Federkraft, welche die Kugel in die Rastvertiefung drückt, mindestens so groß sein, dass sie nicht durch die Kraft des Federelements überwunden wird.

Ebenso kann die Einrichtung zur Erfassung des Gewichts des Behälters durch einen elektronischen Sensor gebildet sein, der das momentane Gewicht des Gepäckablagebehälters erfasst. Natürlich erfordert ein derartiger elektronischer Sensor eine Spannungsversorgung und die dazu notwendigen Verbindungsleitungen, welche im Gegensatz zur rein mechanischen Lösung nachteilig sind.

Ebenso kann die Einrichtung zur Änderung der Federkraft des Federelements auch durch ein elektronisches Element, beispielsweise einen elektrischen Stellmotor od. dgl., gebildet sein, der die Federkraft des Federelements stufenlos ändern kann. Auch diese Realisierung weist gegenüber einer einfachen mechanischen Konstruktion Nachteile in Bezug auf Robustheit und Wartungsfreiheit aber auch auf Kosten und Gewicht auf.

Die zweite erfindungsgemäße Aufgabe wird durch einen absenkbaren Gepäckablagebehälter der angegebenen Art gelöst, bei dem die Einrichtung zur Erfassung des Gewichts des Behälters mit einer Einrichtung zur Änderung der Federkraft des Federelements verbunden ist.

Vorteilhafterweise ist beidseitig des Behälters zumindest ein Lenker drehbar angeordnet, der an dem feststehenden Strukturbauteil angelenkt ist, und ist weiters ein Element zur Synchronisation der Bewegung der Lenker an beiden Seiten des Behälters angeordnet. Dadurch wird eine synchrone Bewegung des Behälters während des Absenkvorgangs erzielt und somit Verspannungen oder ungleiche Belastungen der Aufhängevorrichtung vermieden.

Das Synchronisationselement kann in einfachster Weise durch ein drehfest mit den Lenkern an beiden Seiten des Behälters verbundenes Rohr od. dgl. gebildet sein.

Um auch den Schließvorgang des Gepäckablagebehälters zu dämpfen, kann ein weiterer Dämpfer zur Dämpfung der Bewegung des Behälters in seine geschlossene Stellung vorgesehen sein.

Die Erfindung wird anhand der beigefügten Zeichnungen, welche ein Ausführungsbeispiel der Erfindung zeigen, näher erläutert.

Darin zeigen:
Fig. 1 einen Schnitt durch einen Teil eines Rumpfs eines Passagierflugzeugs;
Fig. 2 eine Ausführungsform eines absenkbaren Gepäckablagebehälters in geschlossener Stellung in Seitenansicht;
Fig. 3 den Gepäckablagebehälter gemäß Fig. 2 in teilweiser geöffneter Stellung;
Fig. 4 den Gepäckablagebehälter gemäß Fig. 2 in geöffneter Stellung;
Fig. 5 den Gepäckablagebehälter bei einer Belastung über einen vorgegebenen Grenzwert mit zugeschaltetem, zusätzlichem Federelement;
Fig. 6 das Detail VI aus Fig. 5 in vergrößerter Darstellung;
Fig. 7 das Detail VII aus Fig. 4 in vergrößerter Darstellung;
Fig. 8 eine weitere Ausführungsform eines absenkbaren Gepäckablagebehälters in geschlossener Stellung in perspektivischer Ansicht;
Fig. 9 den absenkbaren Gepäckablagebehälter aus Fig. 8 in geöffneter Stellung;
Fig. 10 das Detail X aus Fig. 9 in vergrößerter Ansicht;
Fig. 11 eine Ausführungsform des Federelements mit koaxial angeordnetem zusätzlichen Federelement bei Aktivierung nur des zusätzlichen Federelements in Seitenansicht in geschnittener Darstellung des Federelements und in der Ansicht auf die als Scheibe ausgebildete Rückhalteeinrichtung samt Schalthebel;
Fig. 12 das Federelement gemäß Fig. 11, in einer anderen Schaltstellung des Schalthebels;
Fig. 13 das Federelement gemäß Fig. 11 in einer weiteren Schaltstellung, bei der beide Federelemente aktiviert sind; und
Fig. 14 eine perspektivische Ansicht eines erfindungsgemäßen absenkbaren Gepäckablagebehälters in geschlossener und geöffneter Stellung.

Fig. 1 zeigt einen Schnitt durch einen Teil eines Flugzeugrumpfs 30, in dem die Sitze 31 für die Passagiere angeordnet sind. Über den Sitzen 31 befinden sich die Gepäckablagebehälter 21, welche für eine leichtere Be- und Entladung verschwenkbar oder absenkbar angeordnet sein können.

Fig. 2 zeigt einen absenkbaren Gepäckablagebehälter 21, der mit der erfindungsgemäßen Aufhängevorrichtung ausgestattet ist. Der Behälter 21 ist über die Aufhängevorrichtung mit einem feststehenden Strukturbauteil 20 verbunden, der beispielsweise mit dem Rumpf eines Flugzeuges od. dgl. verbunden ist. Der absenkbare Behälter 21 ist vorzugsweise muldenförmig ausgebildet. Zwischen dem Strukturbauteil 20 und einer Seitenwand des Behälters 21 ist die Aufhängevorrichtung vorzugsweise beidseitig des Behälters angeordnet. Die Aufhängevorrichtung besteht beispielsweise aus einem oberen Lenker 4 und einem unteren Lenker 5. Der obere Lenker 4 ist mit einem Ende (Drehpunkt A) am Strukturbauteil 20 oder einem daran angeschlossenen Element montiert, und mit dem anderen Ende (Drehpunkt B) drehbar am Behälter 21 befestigt. Der untere Lenker 5 ist mit einem Ende (Drehpunkt D) mit dem Strukturbauteil 20 verbunden und mit dem anderen Ende (Drehpunkt E) über ein Dämpfungselement 2 mit dem mit dem Behälter 21 verbundenen Ende des oberen Lenkers 4 verbunden. Am Drehpunkt C des oberen Lenkers 4 ist ein Teil 3 eines Kniehebels angelenkt, an dessen Ende am Drehpunkt H das Federelement 1 angreift. Das Federelement 1 ist an seinem anderen Ende am Drehpunkt G mit dem Strukturbauteil 20 verbunden. Das eine Ende des Kniehebelteils 3 ist mit dem weiteren Teil 3' des Kniehebels am Drehpunkt H gelenkig verbunden, dessen anderes Ende am Drehpunkt F gelenkig mit dem Behälter 21 verbunden ist. Der Kniehebelteil 3' bewirkt eine Führung der Aufhängevorrichtung während der Absenkung des Behälters 21. Zusätzlich kann eine Führungskulisse 10, beispielsweise in einer mit dem Strukturbauteil 20 verbundenen Wand, angeordnet sein, welche eine seitliche Auslenkung während der :Bewegung des Gepäckablagebehälters 21 ausschließt. Die Führungskulisse 10 ist entsprechend der Bewegung des Endes des Federelements 1 gestaltet. Zur Dämpfung der Bewegung während des Verschließens des Gepäckablagebehälters 21 kann ein zusätzlicher Dämpfer 6 angeordnet sein, der beispielsweise auf den unteren Kniehebelteil 3' wirkt und die Bewegung des Behälters 21 kurz vor dem Verschließen dämpft. Der Dämpfer 6 ist am Strukturbauteil 20 angeordnet. Der Dämpfer 6 kann auch auf einen anderen beweglichen Teil der Aufhängevorrichtung wirken. Das Federelement 1 ist beispielsweise durch eine Schraubenfeder 14 gebildet, welche zur Verhinderung einer seitlichen Auslenkung auf einem Stab 15 angeordnet ist. Über der Schraubenfeder 14 ist eine Hülse 16 angeordnet, welche einen Flansch 17 aufweist, über den die Hülse 16 mit Hilfe eines Hakens 13 in der dargestellten Position gehalten wird. Erfindungsgemäß ist am Behälter 21 eine Einrichtung zur Erfassung des Gewichts des Behälters 21 angeordnet. Im dargestellten Ausführungsbeispiel ist mit der Seitenwand des Behälters 21 ein Bolzen 18 verbunden, der durch ein Langloch 19 im unteren Lenker 5 ragt. An dem Bolzen 18 ist eine Messfeder 7 befestigt, gegen welche eine Auslenkung des Behälters 21 in geöffneter Stellung möglich ist. Die Auslenkung des Behälters 21 wird über einen Bowdenzug 8 zum Haken 13 weitergeleitet, wodurch eine Änderung der Federkraft des Federelements 1 in Abhängigkeits des Gewichts des Behälters 21 erreicht werden kann. Auf die Funktion der Einrichtung zur Erfassung des Gewichts des Behälters 21 und der Einrichtung zur Änderung der Federkraft des Federelements 1 wird weiter unten näher eingegangen. Üblicherweise werden zu beiden Seiten des Gepäckablagebehälters 21 spiegelbildlich die Aufhängevorrichtung angeordnet. Eine Synchronisierung der Bewegung kann beispielsweise über ein mit den oberen Lenkern 4 drehfest verbundenes Rohr 12 od. dgl. erreicht werden.

Fig. 3 zeigt den absenkbaren Gepäckablagebehälter 21 in teilweise geöffneter Stellung, wobei der Behälterteil 21 durch den Dämpfer 2 gedämpft nach unten abgesenkt wird. Der untere Kniehebelteil 3' ist aus seiner ursprünglichen Lage um den Drehpunkt F verschwenkt, so dass der Kolben 22 des Dämpfers 6 in seine entspannte Ruhelage ausgefahren ist.

Fig. 4 zeigt nun den absenkbaren Gepäckablagebehälter in seiner geöffneten Stellung, in der über die Öffnung 23 des Behälters 21 bequem das Gepäck ein- und ausgeladen werden kann. In der geöffneten Stellung ist das Federelement 1 vollständig komprimiert, so dass die Federkraft beim Anheben des Behälters 21 ihre Kraft ausüben kann. In der dargestellten geöffneten Stellung des Behälters 21 kann der untere Kniehebelteil 3' an einen Endanschlag 24 anschlagen, der die Bewegung begrenzt. Der Endanschlag 24 kann auch an einer anderen Stelle des Strukturbauteils 20 angeordnet sein und auf ein anderes Element der Aufhängevorrichtung wirken. Wird nun der Behälter 21 mit Gepäckstücken beladen, tritt die erfindungsgemäße Einrichtung zur Erfassung des Gewichts des Behälters 21 in Aktion. Dazu wird auf Fig. 7 verwiesen, welche das Detail VII aus Fig. 4 in vergrößerter Darstellung zeigt. Der Behälter 21 sinkt durch das Gewicht der Gepäckstücke gegen die Federkraft der Messfeder 7 nach unten, wobei die Bewegung (Distanz d) durch das Langloch 19 im unteren Lenker 5 begrenzt wird. Über die Federkraft der Messfeder 7 kann der Grenzwert des Gewichts des Behälters 21 eingestellt werden, ab dem eine Änderung der Federkraft des Federelements 1 eintreten soll. Die Messfeder 7 kann beispielsweise über Änderung des Federwegs, beispielsweise über eine Schraube, eingestellt werden (nicht dargestellt). An den Bolzen 18, der durch das Langloch 19 ragt, ist ein Bowdenzug 8 angeschlossen, der die Auslenkung des Behälters 21 auf den Haken 13 überträgt, welcher die Hülse 16 des Federelements 1 zurückhält. Dieser Zustand ist in Fig. 5 dargestellt, bei dem der Behälter 21 gehoben wird und dabei das Federelement 1 durch Zuschaltung eines zusätzlichen Federelements 25 eine erhöhte Federkraft ausübt. Durch das Gewicht des Behälters 21 wurde der Haken 13 bewegt und die Hülse 16 freigegeben, so dass das unter der Hülse 16 angeordnete und vorgespannte weitere Federelement 25 freigegeben wird. Dadurch kann das zusätzliche Federelement 25, welches beispielsweise ebenfalls durch eine Schraubenfeder gebildet ist, zusätzlich zur Schraubenfeder 14 des Federelements 1 ihre Kraft ausüben. Dadurch wird die Bewegung des Behälters 21 in die geschlossene Stellung auch bei voller Beladung unterstützt. Wird der Gepäckablagebehälter 21 wieder geöffnet und entladen, so hebt sich der Behälter 21 nach oben und der Haken 13 hält die Hülse 16 des Federelements 1 wieder fest, so dass die Kraft der Schraubenfeder 25 keine Wirkung ausübt und lediglich die Kraft der Schraubenfeder 14 zur Geltung kommt, welche zur Unterstützung des Hebevorgangs des leeren oder leicht beladenen Behälters 21 ausreicht.

Eine Ausführungsform des erfindungsgemäßen Federelements 1 ist in Fig. 6, welche das Detail VI aus Fig. 5 in geschnittener Darstellung zeigt, wiedergegeben. Das Federelement 1 besteht aus einer Schraubenfeder 14, welche über einen Stab 15 angeordnet ist. Das eine Ende des Federelements 1 ist am Drehpunkt G mit dem Strukturbauteil 20 verbunden, während das andere Ende des Federelements 1 über den Drehpunkt H mit dem Behälter 21 verbunden ist. Somit übt die Schraubenfeder 14 eine Kraft vom Drehpunkt G in Richtung des Drehpunkts H aus. Über der Schraubenfeder 14 ist eine Hülse 26 angeordnet, welche eine Länge entsprechend dem Hub des Federelements 1 aufweist. Über der Hülse 26 ist die zusätzliche Schraubenfeder 25 angeordnet, welche von der Hülse 16 abgedeckt ist. Die Schraubenfeder 25 wird vom Ende 27 der Hülse 16 in komprimierter Form gehalten, so lange der Haken 13 die Hülse 16 über den Flansch 17 zurückhält. Nach Betätigung des Hakens 13 wird die Hülse 16 gegen das Ende des Federelements 1 gedrückt und die Schraubenfeder 25 kann ihre Kraft in Richtung des Drehpunkts H entfalten. Damit das Ende 27 der Hülse 16 nicht über den Drehpunkt H hinausgehen kann, ist ein erweiterter Flansch 28 am Stab 15 angeordnet. Beim Öffnen des Gepäckablagebehälters 21 wird das Federelement 1 zusammengedrückt, worauf der Flansch 17 der Hülse 16 wieder hinter den Haken 13 gepresst wird, der im Falle eines leeren oder leicht beladenen Behälters 21 die Hülse 16 wieder zurückhält. Zu diesem Zweck muss der Haken 13 beispielsweise mit Hilfe einer Schraubenfeder 28 vorgespannt werden. Obgleich die dargestellte koaxiale, zweistufige Anordnung des Federelements 1 Vorteile aufweist, kann auch eine parallele Anordnung zweier oder mehrerer Federelemente zur Erfüllung der erfindungsgemäßen Aufgabe dienen.

Fig. 8 zeigt eine perspektivische Ansicht einer weiteren Ausführungsform des Überkopfgepäckablagebehälters 21 in geschlossener Stellung. Dabei ist der feststehende Strukturbauteil 20 zur besseren Ansicht auf die Aufhängevorrichtung ohne Seitenwände dargestellt. Das Dämpfungselement 2 ist in dieser Ausführungsvariante zwischen dem oberen Lenker 4 und einem Element zur Verbindung mit dem Rumpf des Flugzeugs od. dgl. verbunden. Die Aufhängevorrichtung besteht wie bei der Ausführungsform gemäß den Fig. 2 bis 5 aus einem oberen Lenker 4 und einem unteren Lenker 5, zwischen deren Enden (Drehpunkte D und E) ein Dämpfungselement 2 angeordnet ist. Im Gegensatz zur Ausführungsform gemäß den Fig. 2 bis 5 ist am Drehpunkt C des oberen Lenkers 4 kein Kniehebel sondern ein starrer Hebel 29 angeordnet, der mit seinem anderen Ende am Drehpunkt F gelenkig mit der Seitenwand 33 des feststehenden Strukturbauteils 20 verbunden ist. Am Drehpunkt H des Hebels 29 greift das eine Ende des Federelements 1 an, welches mit seinem anderen Ende am Drehpunkt G mit der Seitenwand 33 des Strukturbauteils 20 verbunden ist. Erfindungsgemäß ist an der Seitenwand des Behälters 21 eine Schaltkulisse 34 angeordnet, welche in geöffneter Stellung des Gepäckablagebehälters 21 entsprechend Fig. 9 mit einem Schalthebel 35 des Federelements 1 zusammenwirkt und eine Umschaltung des Federelements 1 in Abhängigkeit des Gewichts des Behälters 21 bewirkt. Zu diesem Zweck ist der bewegliche Behälter 21 in seiner geöffneten Stellung in seiner Lage gegen die Federkraft einer Messfeder verschiebbar angeordnet, wodurch das Gewicht des Behälters 21 erfasst werden kann. Die Verschiebbarkeit des Behälters 21 in Abhängigkeit des Gewichts der Beladung kann entsprechend Fig. 7 durch Bewegung eines Bolzens 18 in einem Langloch 13 des Lenkers 5 erfolgen. Die gewichtsbedingte Lageveränderung des Behälters 21 in vorgegebenen Grenzen kann, aber auch auf andere Art und Weise realisiert werden.

Fig. 10 zeigt das Detail X gemäß Fig. 9 in vergrößerter Darstellung. Entsprechend der gewichtsbedingten Lageveränderung des Behälters 21 wird die an der Seitenwand des Behälters 21 befestigte Schaltkulisse 34 bewegt, wobei die Richtung dieser Bewegung beispielsweise durch die Führung des Bolzens 18 im Langloch 19 im unteren Lenker 5 bestimmt wird. Auf der Schaltkulisse 34 liegt das Ende des Schalthebels 35 auf und wird vorzugsweise durch eine nicht dargestellte Feder, beispielsweise eine Torsionsfeder, an die Schaltkulisse 34 gedrückt. Mit dem Schalthebel 35 ist drehfest eine Scheibe 36 verbunden, welche entsprechend gestaltete Ausnehmungen 37 aufweist, über die bei Verdrehung der Scheibe 36 das zumindest eine zusätzliche Federelement 25 zurückgehalten oder freigegeben werden kann bzw. zwischen den Federelementen 1 und 25 umgeschaltet werden kann. Im dargestellten Ausführungsbeispiel wird dies durch eine um das zusätzliche Federelement 25 angeordnete Hülse 16 erzielt, deren Fortsatz durch die Ausnehmung 37 der Scheibe 36 ragt und bei entsprechender Winkelstellung der Scheibe 36 zurückgehalten oder freigegeben werden kann. Die Funktion des Federelements 1 zusammen mit dem zusätzlichen Federelement 25 wird anhand der Fig. 11 bis 13 näher erläutert.

Fig. 11 zeigt die Ausführungsform, bei welcher der Gepäckbehälter 21 leer oder nur leicht beladen ist und somit nicht durch das Gewicht der Beladung nach unten gedrückt wird. Somit befindet sich der Schalthebel 35 auf der obersten Stufe der Schaltkulisse 34. Die Scheibe 36, welche mit dem Schalthebel 35 drehfest verbunden ist, gibt in dieser Winkelposition die Hülse 16 um das Federelement 25 frei, so dass dieses seine Kraft zur Unterstützung der Bewegung des Behälters 21 in seine geschlossene Stellung ausüben kann. Dies wird dadurch erreicht, dass das durch die Ausnehmung 37 in der Scheibe 36 ragende Ende der Hülse 16 freigegeben wird und durch die Federkraft der Feder 25 von der Scheibe 36 wegbewegt wird. Dies kann aus der Schnittzeichnung der Federelemente 1, 25 erkannt werden. Das Federelement 1, welches koaxial zum Federelement 25 angeordnet ist, wird über Verbindungen mit der Platte 38 durch die Stellung der Scheibe 36 zurückgehalten, so es keine Druckkraft ausüben kann. In Summe wirkt somit lediglich die Druckkraft des kleineren Federelements 25.

Fig. 12 zeigt den Fall eines mittelmäßig beladenen Behälters 21, wodurch dieser entgegen der Kraft einer nicht dargestellten Messfeder in seiner Lage nach unten bewegt wird. Dadurch führt auch die Schaltkulisse 34 eine entsprechende Bewegung aus, so dass der Schalthebel 35 auf der tieferliegenden Stufe der Schaltkulisse 34 zu liegen kommt und dadurch eine Drehbewegung der mit dem Schalthebel 35 verbundenen Scheibe 36 bewirkt. Aufgrund dieser Drehbewegung der Scheibe 36, welche im dargestellten Ausführungsbeispiel etwa 25° im Uhrzeigersinn beträgt, wird die Hülse 16 um das Federelement 25 festgehalten, so dass das Federelement 25 keine Kraft ausüben kann. Dafür wird entsprechend der Winkellage der Scheibe 36 das Federelement 1 freigegeben und kann somit seine Kraft ausüben. Bei dieser mittleren Beladung des Behälters 21 wirkt somit nur das größere Federelement 1.

Fig. 13 zeigt den Zustand eines vollbeladenen Behälters 21, bei dem die Schaltkulisse 34 ein noch weiteres Stück bewegt wird, so dass der Schalthebel 35 auf der untersten Stufe der Schaltkulisse zu liegen kommt, so dass die Scheibe 36 eine weitere Drehbwegung im Uhrzeigersinn vollzieht. Gegenüber der Lage gemäß Fig. 11 ist die Scheibe 36 im dargestellten Ausführungsbeispiel um etwa 50° im Uhrzeigersinn verdreht. In dieser Position sind entsprechende Ausnehmungen 37 an der Scheibe 36 angeordnet, welche sowohl die Hülse 16 des Federelements 25 als auch die entsprechenden Rückhalteelemente des Federelements 1 freigeben, so dass beide Federelemente 1, 25 ihre Kraft ausüben können. In diesem vollbeladenen Zustand des Behälters 21 wird somit die volle Kraft zur Unterstützung der Schließbewegung entfaltet. Anstelle der in den Fig. 9 bis 13 dargestellten dreistufigen Konstruktion kann natürlich auch eine zweistufige oder mehrstufige Anordnung realisiert werden. Ebenso ist es unerheblich, ob das Federelement 1 um dem Federelement 25 oder umgekehrt angeordnet ist. Eine Umschaltung zwischen den einzelnen Stufen kann immer nur im geöffneten Zustand des Behälters 21 erfolgen, in dem alle Rückhalteeinrichtungen der Federelemente 1 und 25 durch die Öffnungen 37 in der Scheibe 36 ragen und somit eine Verriegelung oder Freigabe der Federelemente 1 oder 25 zulässig ist.

Fig. 14 zeigt schließlich den Gepäckablagebehälter 21, welcher zum Zwecke der Absenkbarkeit mit der erfindungsgemäßen Aufhängevorrichtung versehen ist. Im linken Bild ist der Behälter 21 in seiner geschlossenen Stellung dargestellt, in der er gegen einen Strukturbauteil 20 gedrückt wird und über eine Verschlusseinrichtung 32 fixiert wird. Die Aufhängevorrichtungen sind zwischen einer Seitenwand 33 des feststehenden Strukturbauteils 20 und der Seitenwand des Behälters 21 angeordnet.Die beidseitig angeordneten oberen Lenker 4 sind ersichtlich. Zur Synchronisation der Absenkbewegung sind die Lenker 4 drehfest über ein Rohr 12 od. dgl. miteinander verbunden. Das rechte Bild zeigt den abgesenkten Behälter 21, wodurch die Öffnung 23 zur Be- und Entladung des Behälters 21 mit Gepäckstücken freigegeben wird. Der untere Lenker 5 und ein Teil des Dämpfungselements 2 sind ersichtlich.

Aufgrund der Robustheit und Wartungsfreiheit wird einer rein mechanischen Lösung der Vorzug gegeben. Allerdings sei bemerkt, dass auch eine elektronische Einrichtung zur Erfassung des Gewichts des Behälter 21 und auch eine elektronische Einrichtung zur Änderung der Federkraft des Federelements 1 vorgesehen werden könnte. Allerdings ist für eine elektronische Lösung eine Spannungsversorgung einerseits und eine Verkabelung der Elemente andererseits notwendig, was wiederum zu einem erhöhten Gewicht, aber auch zu einem erhöhten Wartungs- und Installationsaufwand führt. Weiters sei bemerkt, dass prinzipiell verschiedenste Federelemente zur Anwendung kommen können, wobei allerdings Schraubenfedern aufgrund derer Einfachheit und Robustheit der Vorzug gegeben wird. Pneumatische Federzylinder haben den Nachteil, dass sie auf Änderungen der Temperatur reagieren und somit ihre Kraftwirkung von der Temperatur abhängig ist, was insbesondere bei Flugzeugen, die hohen Temperaturschwankungen ausgesetzt sind, nachteilig sein kann. Die Elemente der dargestellten Aufhängevorrichtung können aus Leichtmetall, wie Aluminium oder Magnesium, hergestellt sein, oder auch aus Kunststoff, vorzugsweise faserverstärktem Kunststoff, aufgebaut werden.

## Patentansprüche (Patentansprüche für folgende(n) Vertragsstaat(en): AT, DE, FR, GB, IT, SE)

1. Aufhängevorrichtung für absenkbare Gepäckablagebehälter (21) mit zumindest einem Federelement (1) zur Unterstützung der Bewegung des Behälters (21) in seine geschlossene Stellung entgegen der Schwerkraft und zumindest einem Dämpfungselement (2) zur Dämpfung der Bewegung des Behälters (21) in seine geöffnete Stellung, mit einer Einrichtung zur Erfassung des Gewichts des Behälters (21) und zumindest einem in Abhängigkeit des erfassten Gewichts des Behälters (21) zuschaltbaren bzw. umschaltbaren zusätzlichen Federelements (25), wobei eine Rückhalteeinrichtung (13, 36) zur Fixierung des zumindest einen zusätzlichen Federelements (25) vorgesehen ist, und die Rückhalteeinrichtung (13, 36) durch die Einrichtung zur Erfassung des Gewichts des Behälters (21) betätigbar ist, **dadurch gekennzeichnet, dass** eine Einrichtung zum Halten des Behälters (21) in seiner geöffneten Stellung vorgesehen ist.

2. Vorrichtung nach Anspruch 1, **dadurch gekennzeichnet, dass** das Federelement (1) sowie das zumindest eine zusätzliche Federelement (25) durch mechanische Schraubenfedern (14, 25) gebildet sind, welche vorzugsweise koaxial zueinander angeordnet sind.

3. Vorrichtung nach Anspruch 1 oder 2, **dadurch gekennzeichnet, dass** das zumindest eine zusätzliche Federelement (25) durch eine Hülse (16) umgeben ist, welche durch die Rückhalteeinrichtung (13, 36) fixierbar ist, sodass das zumindest eine zusätzliche Federelement (25) in gespannter Lage fixierbar ist.

4. Vorrichtung nach einem der Ansprüche 1 bis 3, **dadurch gekennzeichnet, dass** die Rückhalteeinrichtung (13, 36) durch einen bewegbaren Haken (13) od. dgl. gebildet ist.

5. Vorrichtung nach einem der Ansprüche 1 bis 3, **dadurch gekennzeichnet, dass** die Rückhalteeinrichtung (13, 36) durch eine drehbar gelagerte Scheibe (36) gebildet ist, wobei die Drehung der Scheibe (36) durch das erfasste Gewicht des Behälters (21) beeinflussbar ist und **dadurch** das zumindest eine zusätzliche Federelement (25) zuschaltbar ist.

6. Vorrichtung nach Anspruch 5, **dadurch gekennzeichnet, dass** die Scheibe (36) drehfest mit einem Schalthebel (35) verbunden ist, und dass am Behälter (21) eine Schaltkulisse (34) mit zumindest zwei unterschiedlichen durch das Gewicht des Behälters (21) beeinflußbare Schaltpositionen angeordnet ist, auf welcher der Schalthebel (35) aufliegt.

7. Vorrichtung nach Anspruch 6, **dadurch gekennzeichnet, dass** der Schalthebel (35) mittels einer Feder od. dgl. gegen die Schaltkulisse (34) gedrückt wird.

8. Vorrichtung nach Anspruch 6 oder 7, **dadurch gekennzeichnet, dass** die Schaltkulisse (34) durch zumindest zwei Raststufen unterschiedlicher Stufentiefe gebildet ist, welche in geöffneter Stellung des Behälters (21) durch dessen Gewicht verschiebbar ist.

9. Vorrichtung nach einem der Ansprüche 1 bis 8, **dadurch gekennzeichnet, dass** die Einrichtung zur Erfassung des Gewichts des Behälters (21) durch eine gegen eine Messfeder (7) auslenkbare Lagerung des Behälters (21) in seiner geöffneten Stellung gebildet ist.

10. Vorrichtung nach Anspruch 9, **dadurch gekennzeichnet, dass** die Lagerung durch ein mit dem Behälter (21) verbundenes Element (18) gebildet ist, welches Element (18) in einer Führung, beispielsweise einem Langloch (19) angeordnet und mit einem Ende der Messfeder (7) verbunden ist.

11. Vorrichtung nach Anspruch 10, **dadurch gekennzeichnet, dass** das mit dem Behälter (21) verbundene Element (18) mit einem Ende eines Bowdenzugs (8) od. dgl. verbunden ist, dessen anderes Ende mit der Rückhalteeinrichtung (13, 36) des zumindest einen zusätzlichen Federelements (25) verbunden ist, sodass bei gewichtsbedingter Auslenkung des Behälters (21) die Rückhalteeinrichtung (13, 36) lösbar ist.

12. Vorrichtung nach einem der Ansprüche 9 bis 11, **dadurch gekennzeichnet, dass** die Messfeder (7) verstellbar ausgeführt ist.

13. Vorrichtung nach einem der Ansprüche 1 bis 12, **dadurch gekennzeichnet, dass** eine Einrichtung zur Änderung der Federkraft des Federelements (1) und bzw. oder des zumindest einen zusätzlichen Federelements (25) vorgesehen ist

14. Vorrichtung nach Anspruch 13, **dadurch gekennzeichnet, dass** die Einrichtung zur Änderung der Federkraft des Federelements (1) und bzw. oder des zumindest einen zusätzlichen Federelements (25) durch eine Schraube zur Veränderung der Vorspannung des Federelements (1) und bzw. oder des zumindest einen zusätzlichen Federelements (25) gebildet ist.

15. Vorrichtung nach einem der Ansprüche 1 bis 14, **dadurch gekennzeichnet, dass** die Halteeinrichtung durch eine federnd gelagerte Kugel gebildet ist, welche in geöffneter Stellung des Behälters (21) in eine entsprechende Rastvertiefung eingreift.

16. Vorrichtung nach Anspruch 1, **dadurch gekennzeichnet, dass** die Einrichtung zur Erfassung des Gewichts des Behälters (21) durch einen elektronischen Sensor gebildet ist.

17. Vorrichtung nach Anspruch 16, **dadurch gekennzeichnet, dass** die Einrichtung zur Änderung der Federkraft des Federelements (1) durch einen elektrischen Stellmotor od. dgl. gebildet ist.

18. Absenkbarer Gepäckablagebehälter (21) mit einer Aufhängevorrichtung nach einem der Ansprüche 1 bis 17, wobei zwischen dem Behälter (21) und einem feststehenden Strukturbauteil (20) seitlich des Behälters (21) zumindest ein Federelement (1) zur Unterstützung der Bewegung des Behälters (21) in seine geschlossene Stellung entgegen der Schwerkraft und zumindest ein Dämpfungselement (2) zur Dämpfung der Bewegung des Behälters (21) in seine offene Stellung angeordnet ist, wobei mit dem Behälterteil (21) eine Einrichtung zur Erfassung des Gewichts des Behälters (21) verbunden ist, **dadurch gekennzeichnet, dass** die Einrichtung zur Erfassung des Gewichts des Behälters (21) mit einer Einrichtung zur Änderung der Federkraft des Federelements (1) verbunden ist.

19. Behälter nach Anspruch 18, **dadurch gekennzeichnet, dass** beidseitig des Behälters (21) zumindest ein Lenker (4) drehbar angeordnet ist, der an dem feststehenden Strukturbauteil (20) angelenkt ist, und dass weiters ein Element zur Synchronisation der Bewegung der Lenker (4) an beiden Seiten des Behälters (21) angeordnet ist.

20. Behälter nach Anspruch 19, **dadurch gekennzeichnet, dass** das Synchronisationselement durch ein drehfest mit den Lenkern (4) an beiden Seiten des Behälters (21) verbundenes Rohr (12) od. dgl. gebildet ist.

21. Behälter nach einem der Ansprüche 18 bis 20, **dadurch gekennzeichnet, dass** ein weiterer Dämpfer (6) zur Dämpfung der Bewegung des Behälters (21) in seine geschlossene Stellung vorgesehen ist.

## Patentansprüche (Patentansprüche für folgende(n) Vertragsstaat(en): BE, BG, CH, CY, CZ, DK, EE, ES, FI, GR, IE, LI, LU, MC, NL, PT, SK, TR)

1. Aufhängevorrichtung für absenkbare Gepäckablagebehälter (21) mit zumindest einem Federelement (1) zur Unterstützung der Bewegung des Behälters (21) in seine geschlossene Stellung entgegen der Schwerkraft und zumindest einem Dämpfungselement (2) zur Dämpfung der Bewegung des Behälters (21) in seine geöffnete Stellung und mit einer Einrichtung zur Erfassung des Gewichts des Behälters (21), **dadurch gekennzeichnet, dass** zumindest ein in Abhängigkeit des erfassten Gewichts des Behälters (21) zuschaltbares bzw. umschaltbares zusätzliches Federelement (25) und eine Rückhalteeinrichtung (13, 36) zur Fixierung des zumindest einen zusätzlichen Federelements (25) vorgesehen ist, wobei die Rückhalteeinrichtung (13, 36) durch die Einrichtung zur Erfassung des Gewichts des Behälters (21) betätigbar ist.

2. Vorrichtung nach Anspruch 1, **dadurch gekennzeichnet, dass** das Federelement (1) sowie das zumindest eine zusätzliche Federelement (25) durch mechanische Schraubenfedern (14, 25) gebildet sind, welche vorzugsweise koaxial zueinander angeordnet sind.

3. Vorrichtung nach Anspruch 1 oder 2, **dadurch gekennzeichnet, dass** das zumindest eine zusätzliche Federelement (25) durch eine Hülse (16) umgeben ist, welche durch die Rückhalteeinrichtung (13, 36) fixierbar ist, sodass das zumindest eine zusätzliche Federelement (25) in gespannter Lage fixierbar ist.

4. Vorrichtung nach einem der Ansprüche 1 bis 3, **dadurch gekennzeichnet, dass** die Rückhalteeinrichtung (13, 36) durch einen bewegbaren Haken (13) od. dgl. gebildet ist.

5. Vorrichtung nach einem der Ansprüche 1 bis 3, **dadurch gekennzeichnet, dass** die Rückhalteeinrichtung (13, 36) durch eine drehbar gelagerte Scheibe (36) gebildet ist, wobei die Drehung der Scheibe (36) durch das erfasste Gewicht des Behälters (21) beeinflussbar ist und **dadurch** das zumindest eine zusätzliche Federelement (25) zuschaltbar ist.

6. Vorrichtung nach Anspruch 5, **dadurch gekennzeichnet, dass** die Scheibe (36) drehfest mit einem Schalthebel (35) verbunden ist, und dass am Behälter (21) eine Schaltkulisse (34) mit zumindest zwei unterschiedlichen durch das Gewicht des Behälters (21) beeinflußbare Schaltpositionen angeordnet ist, auf welcher der Schalthebel (35) aufliegt.

7. Vorrichtung nach Anspruch 6, **dadurch gekennzeichnet, dass** der Schalthebel (35) mittels einer Feder od. dgl. gegen die Schaltkulisse (34) gedrückt wird.

8. Vorrichtung nach Anspruch 6 oder 7, **dadurch gekennzeichnet, dass** die Schaltkulisse (34) durch zumindest zwei Raststufen unterschiedlicher Stufentiefe gebildet ist, welche in geöffneter Stellung des Behälters (21) durch dessen Gewicht verschiebbar ist.

9. Vorrichtung nach einem der Ansprüche 1 bis 8, **dadurch gekennzeichnet, dass** die Einrichtung zur Erfassung des Gewichts des Behälters (21) durch eine gegen eine Messfeder (7) auslenkbare Lagerung des Behälters (21) in seiner geöffneten Stellung gebildet ist.

10. Vorrichtung nach Anspruch 9, **dadurch gekennzeichnet, dass** die Lagerung durch ein mit dem Behälter (21) verbundenes Element (18) gebildet ist, welches Element (18) in einer Führung, beispielsweise einem Langloch (19) angeordnet und mit einem Ende der Messfeder (7) verbunden ist.

11. Vorrichtung nach Anspruch 10, **dadurch gekennzeichnet, dass** das mit dem Behälter (21) verbundene Element (18) mit einem Ende eines Bowdenzugs (8) od. dgl. verbunden ist, dessen anderes Ende mit der Rückhalteeinrichtung (13, 36) des zumindest einen zusätzlichen Federelements (25) verbunden ist, sodass bei gewichtsbedingter Auslenkung des Behälters (21) die Rückhalteeinrichtung (13, 36) lösbar ist.

12. Vorrichtung nach einem der Ansprüche 9 bis 11, **dadurch gekennzeichnet, dass** die Messfeder (7) verstellbar ausgeführt ist.

13. Vorrichtung nach einem der Ansprüche 1 bis 12, **dadurch ge** **kennzeichnet, dass** eine Einrichtung zur Änderung der Federkraft des Federelements (1) und bzw. oder des zumindest einen zusätzlichen Federelements (25) vorgesehen ist

14. Vorrichtung nach Anspruch 13, **dadurch gekennzeichnet, dass** die Einrichtung zur Änderung der Federkraft des Federelements (1) und bzw. oder des zumindest einen zusätzlichen Federelements (25) durch eine Schraube zur Veränderung der Vorspannung des Federelements (1) und bzw. oder des zumindest einen zusätzlichen Federelements (25) gebildet ist.

15. Vorrichtung nach einem der Ansprüche 1 bis 14, **dadurch gekennzeichnet, dass** eine Einrichtung zum Halten des Behälters (21) in seiner geöffneten Stellung vorgesehen ist.

16. Vorrichtung nach Anspruch 15, **dadurch gekennzeichnet, dass** die Halteeinrichtung durch eine federnd gelagerte Kugel gebildet ist, welche in geöffneter Stellung des Behälters (21) in eine entsprechende Rastvertiefung eingreift.

17. Vorrichtung nach Anspruch 1, **dadurch gekennzeichnet, dass** die Einrichtung zur Erfassung des Gewichts des Behälters (21) durch einen elektronischen Sensor gebildet ist.

18. Vorrichtung nach Anspruch 17, **dadurch gekennzeichnet, dass** die Einrichtung zur Änderung der Federkraft des Federelements (1) durch einen elektrischen Stellmotor od. dgl. gebildet ist.

19. Absenkbarer Gepäckablagebehälter (21) mit einer Aufhängevorrichtung nach einem der Ansprüche 1 bis 18, wobei zwischen dem Behälter (21) und einem feststehenden Strukturbauteil (20) seitlich des Behälters (21) zumindest ein Federelement (1) zur Unterstützung der Bewegung des Behälters (21) in seine geschlossene Stellung entgegen der Schwerkraft und zumindest ein Dämpfungselement (2) zur Dämpfung der Bewegung des Behälters (21) in seine offene Stellung angeordnet ist, wobei mit dem Behälterteil (21) eine Einrichtung zur Erfassung des Gewichts des Behälters (21) verbunden ist, **dadurch gekennzeichnet, dass** die Einrichtung zur Erfassung des Gewichts des Behälters (21) mit einer Einrichtung zur Änderung der Federkraft des Federelements (1) verbunden ist.

20. Behälter nach Anspruch 19, **dadurch gekennzeichnet, dass** beidseitig des Behälters (21) zumindest ein Lenker (4) drehbar angeordnet ist, der an dem feststehenden Strukturbauteil (20) angelenkt ist, und dass weiters ein Element zur Synchronisation der Bewegung der Lenker (4) an beiden Seiten des Behälters (21) angeordnet ist.

21. Behälter nach Anspruch 20, **dadurch gekennzeichnet, dass** das Synchronisationselement durch ein drehfest mit den Lenkern (4) an beiden Seiten des Behälters (21) verbundenes Rohr (12) od. dgl. gebildet ist.

22. Behälter nach einem der Ansprüche 19 bis 21, **dadurch gekennzeichnet, dass** ein weiterer Dämpfer (6) zur Dämpfung der Bewegung des Behälters (21) in seine geschlossene Stellung vorgesehen ist.

## Claims (Claims for the following Contracting State(s): AT, DE, FR, GB, IT, SE)

1. A suspension device for lowerable luggage stowage compartments (21) comprising at least one spring element (1) for assisting the movement of the compartment (21) into its closed position contrary to gravity, and at least one damping element (2) for damping the movement of the compartment (21) into its opened position, and comprising a means for detecting the weight of the compartment (21) and at least one additional spring element (25) capable of being activated or switched over in dependence on the detected weight of the compartment (21), a retention device (13, 36) being provided for fixing the at least one additional spring element (25), and said retention device (13, 36) is activatable by the means for detecting the weight of the compartment (21), **characterised in that** a device for maintaining the compartment (21) in its opened position is provided.

2. A device according to claim 1, **characterised in that** the spring element (1) as well as the at least one additional spring element (25) are formed by mechanical coil springs (14, 25) which preferably are arranged coaxially to each other.

3. A device according to claim 1 or 2, **characterised in that** the at least one additional spring element (25) is surrounded by a sleeve (16) which is fixable by the retention device (13, 36) so that the at least one additional spring element (25) can be fixed when in its tensioned position.

4. A device according to any one of claims 1 to 3, **characterised in that** the retention device (13, 36) is formed by a movable hook (13) or the like.

5. A device according to any one of claims 1 to 3, **characterised in that** the retention device (13, 36) is formed by a rotatably mounted disk (36), wherein the rotation of the disk (36) can be influenced by the detected weight of the compartment (21) and by this the at least one additional spring element (25) can be activated.

6. A device according to claim 5, **characterised in that** the disk (36) is non-rotationally connected to a switching lever (35) and a switching link (34) having at least two different switching positions that can be influenced by the weight of the compartment (21) is arranged on the compartment (21), with the switching lever (35) resting on the switching link.

7. A device according to claim 6, **characterised in that** the switching lever (35) is pressed against the switching link (34) by means of a spring or the like.

8. A device according to claim 6 or 7, **characterised in that** the switching link (34) is formed by at least two snap-in steps having different step depths, which switching link (34), in the opened position of the compartment (21), is displaceable by the weight of the latter.

9. A device according to any one of claims 1 to 8, **characterised in that** the means for detecting the weight of the compartment (21) is formed by a bearing of the compartment (21) in its open position, which bearing can be deflected against a measurement spring (7).

10. A device according to claim 9, **characterised in that** the bearing is formed by an element (18) connected to the compartment (21), which element (18) is arranged in a guide, e.g. a long hole (19), and is connected to one end of the measurement spring (7).

11. A device according to claim 10, **characterised in that** the element (18) connected to the compartment (21) is connected to one end of the Bowden cable (8) or the like, whose other end is connected to the retention device (13, 36) of the at least one additional spring element (25) so that the retention device (13, 36) is releasable if the compartment (21) is deflected due to its weight.

12. A device according to any one of claims 9 to 11, **characterised in that** the measurement spring (7) is designed to be adjustable.

13. A device according to any one of claims 1 to 12, **characterised in that** a device for changing the spring force of the spring element (1) and/or of the at least one additional spring element (25) is provided.

14. A device according to claim 13, **characterised in that** the device for changing the spring force of the spring element (1) and/or of the at least one additional spring element (25) is formed by a screw for changing the bias of the spring element (1) and/or of the at least one additional spring element (25).

15. A device according to any one of claims 1 to 14, **characterised in that** the maintaining device is formed by a resiliently mounted sphere which engages in a corresponding snap-in depression when the compartment (21) is in its opened position.

16. A device according to claim 1, **characterised in that** the means for detecting the weight of the compartment (21) is formed by an electronic sensor.

17. A device according to claim 16, **characterised in that** the device for changing the spring force of the spring element (1) is formed by an electric servo-motor or the like.

18. A lowerable luggage stowage compartment (21) comprising a suspension device according to any one of claims 1 to 17, wherein at least one spring element (1) is arranged between the compartment (21) and a stationary structural element (20) laterally of the compartment (21) so as to assist in the movement of the compartment (21) into its closed position contrary to gravity, and at least one damping element (2) is arranged for damping the movement of the compartment (21) into its opened position, a means for detecting the weight of the compartment (21) being connected to the compartment part (21), **characterised in that** the means for detecting the weight of the compartment (21) is connected to a means for changing the spring force of the spring element (1).

19. A compartment according to claim 18, **characterised in that** on either side of the compartment (21) at least one guide rod (4) is rotatably arranged which is hinged to the stationary structural element (20), and that furthermore, an element is arranged for synchronising the movement of the guide rods (4) on both sides of the compartment (21).

20. A compartment according to claim 19, **characterised in that** the synchronising element is formed by a tube (12) or the like which is non-rotationally connected to the guide rods (4) on either side of the compartment (21).

21. A compartment according to any one of claims 18 to 20, **characterised in that** a further damping means (6) is provided for damping the movement of the compartment (21) into its closed position.

## Claims (Claims for the following Contracting State(s): BE, BG, CH, CY, CZ, DK, EE, ES, FI, GR, IE, LI, LU, MC, NL, PT, SK, TR)

1. A suspension device for lowerable luggage stowage compartments (21) comprising at least one spring element (1) for assisting the movement of the compartment (21) into its closed position contrary to gravity, and at least one damping element (2) for damping the movement of the compartment (21) into its opened position, and comprising a means for detecting the weight of the compartment (21), **characterised in that** at least one additional spring element (25) capable of being activated or switched over in dependence on the detected weight of the compartment (21) and a retention device (13, 36) for fixing the at least one additional spring element (25) are provided, wherein the retention device (13, 36) is activatable by the means for detecting the weight of the compartment (21).

2. A device according to claim 1, **characterised in that** the spring element (1) as well as the at least one additional spring element (25) are formed by mechanical coil springs (14, 25) which preferably are arranged coaxially to each other.

3. A device according to claim 1 or 2, **characterised in that** the at least one additional spring element (25) is surrounded by a sleeve (16) which is fixable by the retention device (13, 36) so that the at least one additional spring element (25) can be fixed when in its tensioned position.

4. A device according to any one of claims 1 to 3, **characterised in that** the retention device (13, 36) is formed by a movable hook (13) or the like.

5. A device according to any one of claims 1 to 3, **characterised in that** the retention device (13, 36) is formed by a rotatably mounted disk (36), wherein the rotation of the disk (36) can be influenced by the detected weight of the compartment (21) and by this the at least one additional spring element (25) can be activated.

6. A device according to claim 5, **characterised in that** the disk (36) is non-rotationally connected to a switching lever (35) and a switching link (34) having at least two different switching positions that can be influenced by the weight of the compartment (21) is arranged on the compartment (21), with the switching lever (35) resting on the switching link.

7. A device according to claim 6, **characterised in that** the switching lever (35) is pressed against the switching link (34) by means of a spring or the like.

8. A device according to claim 6 or 7, **characterised in that** the switching link (34) is formed by at least two snap-in steps having different step depths, which switching link (34), in the opened position of the compartment (21), is displaceable by the weight of the latter.

9. A device according to any one of claims 1 to 8, **characterised in that** the means for detecting the weight of the compartment (21) is formed by a bearing of the compartment (21) in its open position, which bearing can be deflected against a measurement spring (7).

10. A device according to claim 9, **characterised in that** the bearing is formed by an element (18) connected to the compartment (21), which element (18) is arranged in a guide, e.g. a long hole (19), and is connected to one end of the measurement spring (7).

11. A device according to claim 10, **characterised in that** the element (18) connected to the compartment (21) is connected to one end of the Bowden cable (8) or the like, whose other end is connected to the retention device (13, 36) of the at least one additional spring element (25) so that the retention device (13, 36) is releasable if the compartment (21) is deflected due to its weight.

12. A device according to any one of claims 9 to 11, **characterised in that** the measurement spring (7) is designed to be adjustable.

13. A device according to any one of claims 1 to 12, **characterised in that** a device for changing the spring force of the spring element (1) and/or of the at least one additional spring element (25) is provided.

14. A device according to claim 13, **characterised in that** the device for changing the spring force of the spring element (1) and/or of the at least one additional spring element (25) is formed by a screw for changing the bias of the spring element (1) and/or of the at least one additional spring element (25).

15. A device according to any one of claims 1 to 14, **characterised in that** a device for maintaining the compartment (21) in its opened position is provided.

16. A device according to claim 15, **characterised in that** the maintaining device is formed by a resiliently mounted sphere which engages in a corresponding snap-in depression when the compartment (21) is in its opened position.

17. A device according to claim 1, **characterised in that** the means for detecting the weight of the compartment (21) is formed by an electronic sensor.

18. A device according to claim 17, **characterised in that** the device for changing the spring force of the spring element (1) is formed by an electric servo-motor or the like.

19. A lowerable luggage stowage compartment (21) comprising a suspension device according to any one of claims 1 to 18, wherein at least one spring element (1) is arranged between the compartment (21) and a stationary structural element (20) laterally of the compartment (21) so as to assist in the movement of the compartment (21) into its closed position contrary to gravity, and at least one damping element (2) is arranged for damping the movement of the compartment (21) into its opened position, a means for detecting the weight of the compartment (21) being connected to the compartment part (21), **characterised in that** the means for detecting the weight of the compartment (21) is connected to a means for changing the spring force of the spring element (1).

20. A compartment according to claim 19, **characterised in that** on either side of the compartment (21) at least one guide rod (4) is rotatably arranged which is hinged to the stationary structural element (20), and that furthermore, an element is arranged for synchronising the movement of the guide rods (4) on both sides of the compartment (21).

21. A compartment according to claim 20, **characterised in that** the synchronising element is formed by a tube (12) or the like which is non-rotationally connected to the guide rods (4) on either side of the compartment (21).

22. A compartment according to any one of claims 19 to 21, **characterised in that** a further damping means (6) is provided for damping the movement of the compartment (21) into its closed position.

## Revendications (Revendications pour l'(les) Etat(s) contractant(s) suivant(s): AT, DE, FR, GB, IT, SE)

1. Dispositif de suspension pour coffres à bagages (21) abaissables comprenant au moins un élément de ressort (1) pour le soutien du déplacement du coffre (21) dans sa position fermée dans le sens contraire à la force de gravité et au moins un élément d'amortissement (2) pour l'amortissement du déplacement du coffre (21) dans sa position ouverte, un dispositif pour l'enregistrement du poids du coffre (21) et au moins un élément de ressort (25) supplémentaire, pouvant être mis en tension ou hors tension en fonction du poids enregistré du coffre (21), un dispositif de retenue (13, 36) étant prévu pour la fixation du au moins un élément de ressort (25) supplémentaire, et le dispositif de retenue (13, 36) pouvant être actionné par le dispositif pour l'enregistrement du poids du coffre (21), **caractérisé en ce qu'**il est prévu un dispositif pour le maintien du coffre (21) dans sa position ouverte.

2. Dispositif selon la revendication 1, **caractérisé en ce que** l'élément de ressort (1) et le au moins un élément de ressort (25) supplémentaire sont formés par des ressorts hélicoïdaux (14, 25) mécaniques, qui sont disposés de préférence de façon coaxiale les uns par rapport aux autres.

3. Dispositif selon la revendication 1 ou 2, **caractérisé en ce que** le au moins un élément de ressort (25) supplémentaire est entouré par une douille (16), qui peut être fixée par le dispositif de retenue (13, 36), de sorte que le au moins un élément de ressort (25) supplémentaire peut être fixé dans la position tendue.

4. Dispositif selon l'une quelconque des revendications 1 à 3, **caractérisé en ce que** le dispositif de retenue (13, 36) est formé par un crochet mobile (13) ou similaire.

5. Dispositif selon l'une quelconque des revendications 1 à 3, **caractérisé en ce que** le dispositif de retenue (13, 36) est formé par un disque (36) logé de façon pivotante, la rotation du disque (36) pouvant être influencée par le poids enregistré du coffre (21) et **en ce que**, de ce fait, le au moins un élément de ressort (25) supplémentaire peut être mis en tension.

6. Dispositif selon la revendication 5, **caractérisé en ce que** le disque (36) est relié de façon solidaire en rotation à un levier de commutation (35) et **en ce qu'**une coulisse de commutation (34), sur laquelle repose le levier de commutation (35), avec au moins deux positions de commutation différentes et pouvant être influencées par le poids du coffre (21) est disposée sur le coffre (21).

7. Dispositif selon la revendication 6, **caractérisé en ce que** le levier de commutation (35) est appuyé au moins d'un ressort ou similaire contre la coulisse de commutation (34).

8. Dispositif selon la revendication 6 ou 7, **caractérisé en ce que** la coulisse de commutation (34) est formée par au moins deux niveaux d'encliquetage de profondeur de niveau différente, qui peut coulisser dans la position ouverte du coffre (21) sous l'effet de son poids.

9. Dispositif selon l'une des revendications 1 à 8, **caractérisé en ce que** le dispositif pour l'enregistrement du poids du coffre (21) est formé par un logement, pouvant être dévié à l'encontre d'un ressort de mesure (7), du coffre (21) dans sa position ouverte.

10. Dispositif selon la revendication 9, **caractérisé en ce que** le logement est formé par un élément (18) relié au coffre (21), lequel élément (18) est disposé dans un guide, par exemple un trou oblong (19) et est relié à une extrémité du ressort de mesure (7).

11. Dispositif selon la revendication 10, **caractérisé en ce que** l'élément (18) relié au coffre (21) est relié à une extrémité d'un câble Bowden (8) du similaire, dont l'autre extrémité est reliée au dispositif de retenue (13, 36) du au moins un élément de ressort (25) supplémentaire, de sorte que, en cas de déviation due au poids du coffre (21), le dispositif de retenue (13, 36) peut être détaché.

12. Dispositif selon l'une des revendications 9 à 11, **caractérisé en ce que** le ressort de mesure (7) est réalisé de façon réglable.

13. Dispositif selon l'une des revendications 1 à 12, **caractérisé en ce qu'**il est prévu un dispositif pour la variation de la force de ressort de l'élément de ressort (1) et/ou du au moins un élément de ressort (25) supplémentaire.

14. Dispositif selon la revendication 13, **caractérisé en ce que** le dispositif pour la variation de la force de ressort de l'élément de ressort (1) et/ou du au moins un élément de ressort (25) supplémentaire est formé par une vis pour la variation de la pré-tension de l'élément de ressort (1) et/ou du au moins un élément de ressort (25) supplémentaire.

15. Dispositif selon l'une quelconque des revendications 1 à 14, **caractérisé en ce que** le dispositif de retenue est formé par une boule logée de façon élastique, qui s'engage dans une cavité d'encliquetage appropriée lorsque le coffre (21) est en position ouverte.

16. Dispositif selon la revendication 1, **caractérisé en ce que** le dispositif pour l'enregistrement du poids du coffre (21) est formé par un capteur électronique.

17. Dispositif selon la revendication 16, **caractérisé en ce que** le dispositif pour la variation de la force de ressort de l'élément de ressort (1) est formé par un moteur de commande électrique ou similaire.

18. Coffre à bagages (21) abaissable comprenant un dispositif de suspension selon l'une des revendications 1 à 17, au moins un élément de ressort (1) pour le soutien du déplacement du coffre (21) dans sa position fermée dans le sens contraire à la force de gravité et au moins un élément d'amorussement (2) pour l'amortissement du déplacement du coffre (21) dans sa position ouverte étant disposés entre le coffre (21) et un composant de structure (20) fixe sur le côté du coffre (21), un dispositif pour l'enregistrement du poids du coffre (21) étant relié à la partie du coffre (21), **caractérisé en ce que** le dispositif pour l'enregistrement du poids du coffre (21) est relié à un dispositif pour la variation de la force de ressort de l'élément de ressort (1).

19. Coffre selon la revendication 18, **caractérisé en ce que** sur les deux côtés du coffre (21) est disposée de façon rotative au moins une tige directrice (4), qui est articulée sur le composant de structure (20) fixe et **en ce que** également un élément pour la synchronisation du déplacement de la tige directrice (4) est disposé sur les deux côtés du coffre (21).

20. Coffre selon la revendication 19, **caractérisé en ce que** l'élément de synchronisation est formé par un tube (12) ou similaire relié de façon solidaire en rotation aux tiges directrices (4) sur les deux côtés du coffre (21).

21. Coffre selon l'une des revendications 18 à 20, **caractérisé en ce qu'**il est prévu un autre amortisseur (6) pour l'amortissement du déplacement du coffre (21) dans sa position fermée.

## Revendications (Revendications pour l'(les) Etat(s) contractant(s) suivant(s): BE, BG, CH, CY, CZ, DK, EE, ES, FI, GR, IE, LI, LU, MC, NL, PT, SK, TR)

1. Dispositif de suspension pour coffres (21) à bagages abaissables comprenant au moins un élément de ressort (1) pour le soutien du déplacement du coffre (21) dans sa position fermée dans le sens contraire à la force de gravité et au moins un élément d'amortissement (2) pour l'amortissement du déplacement du coffre (21) dans sa position ouverte et un dispositif pour l'enregistrement du poids du coffre (21), **caractérisé en ce qu'**au moins un élément de ressort (25) supplémentaire, pouvant être mis en tension ou hors tension en fonction du poids enregistré du coffre (21) et un dispositif de retenue (13, 36) sont prévus pour la fixation du au moins un élément de ressort (25) supplémentaire, le dispositif de retenue (13, 36) pouvant être actionné par le dispositif pour l'enregistrement du poids du coffre (21).

2. Dispositif selon la revendication 1, **caractérisé en ce que** l'élément de ressort (1) et le au moins un élément de ressort (25) supplémentaire sont formés par des ressorts hélicoïdaux (14, 25) mécaniques, qui sont disposés de préférence de façon coaxiale les uns par rapport aux autres.

3. Dispositif selon la revendication 1 ou 2, **caractérisé en ce que** le au moins un élément de ressort (25) supplémentaire est entouré par une douille (16), qui peut être fixée par le dispositif de retenue (13, 36), de sorte que le au moins un élément de ressort (25) supplémentaire peut être fixé dans la position tendue.

4. Dispositif selon l'une quelconque des revendications 1 à 3, **caractérisé en ce que** le dispositif de retenue (13, 36) est formé par un crochet mobile (13) ou similaire.

5. Dispositif selon l'une quelconque des revendications 1 à 3, **caractérisé en ce que** le dispositif de retenue (13, 36) est formé par un disque (36) logé de façon pivotante, la rotation du disque (36) pouvant être influencée par le poids enregistré du coffre (21) et **en ce que**, de ce fait, le au moins un élément de ressort (25) supplémentaire peut être mis en tension.

6. Dispositif selon la revendication 5, **caractérisé en ce que** le disque (36) est relié de façon solidaire en rotation à un levier de commutation (35) et **en ce qu'**une coulisse de commutation (34), sur laquelle repose le levier de commutation (35), avec au moins deux positions de commutation différentes et pouvant être influencées par le poids du coffre (21) est disposée sur le coffre (21).

7. Dispositif selon la revendication 6, **caractérisé en ce que** le levier de commutation (35) est appuyé au moins d'un ressort ou similaire contre la coulisse de commutation (34).

8. Dispositif selon la revendication 6 ou 7, **caractérisé en ce que** la coulisse de commutation (34) est formée par au moins deux niveaux d'encliquetage de profondeur de niveau différente, qui peut coulisser dans la position ouverte du coffre (21) sous l'effet de son poids.

9. Dispositif selon l'une des revendications 1 à 8, **caractérisé en ce que** le dispositif pour l'enregistrement du poids du coffre (21) est formé par un logement, pouvant être dévié vers un ressort de mesure (7), du coffre (21) dans sa position ouverte.

10. Dispositif selon la revendication 9, **caractérisé en ce que** le logement est formé par un élément (18) relié au coffre (21), lequel élément (18) est disposé dans un guide, par exemple un trou oblong (19) et est relié à une extrémité du ressort de mesure (7).

11. Dispositif selon la revendication 10, **caractérisé en ce que** l'élément (18) relié au coffre (21) est relié à une extrémité d'un câble Bowden (8) ou similaire, dont l'autre extrémité est reliée au dispositif de retenue (13, 36) du au moins un élément de ressort (25) supplémentaire, de sorte que, en cas de déviation due au poids du coffre (21), le dispositif de retenue (13, 36) peut être détaché.

12. Dispositif selon l'une des revendications 9 à 11, **caractérisé en ce que** le ressort de mesure (7) est réalisé de façon réglable.

13. Dispositif selon l'une des revendications 1 à 12, **caractérisé en ce qu'**il est prévu un dispositif pour la variation de la force de ressort de l'élément de ressort (1) et/ou du au moins un élément de ressort (25) supplémentaire.

14. Dispositif selon la revendication 13, **caractérisé en ce que** le dispositif pour la variation de la force de ressort de l'élément de ressort (1) et/ou du au moins un élément de ressort (25) supplémentaire est formé par une vis pour la variation de la pré-tension de l'élément de ressort (1) et/ou du au moins un élément de ressort (25) supplémentaire.

15. Dispositif selon l'une des revendications 1 à 14, **caractérisé en ce qu'**il est prévu un dispositif pour le maintien du coffre (21) dans sa position ouverte.

16. Dispositif selon la revendication 15, **caractérisé en ce que** le dispositif de retenue est formé par une boule logée de façon élastique, qui s'engage dans une cavité d'encliquetage appropriée lorsque le coffre (21) est en position ouverte.

17. Dispositif selon la revendication 1, **caractérisé en ce que** le dispositif pour l'enregistrement du poids du coffre (21) est formé par un capteur électronique.

18. Dispositif selon la revendication 17, **caractérisé en ce que** le dispositif pour la variation de la force de ressort de l'élément de ressort (1) est formé par un moteur de commande électrique ou similaire.

19. Coffre à bagages (21) abaissable comprenant un dispositif de suspension selon l'une des revendications 1 à 18, au moins un élément de ressort (1) pour le soutien du déplacement du coffre (21) dans sa position fermée dans le sens contraire à la force de gravité et au moins un élément d'amortissement (2) pour l'amortissement du déplacement du coffre (21) dans sa position ouverte étant disposés entre le coffre (21) et un composant de structure (20) fixe sur le côté du coffre (21), un dispositif pour l'enregistrement du poids du coffre (21) étant relié à la partie du coffre (21), **caractérisé en ce que** le dispositif pour l'enregistrement du poids du coffre (21) est relié à un dispositif pour la variation de la force de ressort de l'élément de ressort (1).

20. Coffre selon la revendication 19, **caractérisé en ce que** sur les deux côtés du coffre (21) est disposée de façon rotative au moins une tige directrice (4), qui est articulée sur le composant de structure (20) fixe et **en ce que** également un élément pour la synchronisation du déplacement de la tige directrice (4) est disposé sur les deux côtés du coffre (21).

21. Coffre selon la revendication 20, **caractérisé en ce que** l'élément de synchronisation est formé par un tube (12) ou similaire relié de façon solidaire en rotation aux tiges directrices (4) sur les deux côtés du coffre (21).

22. Coffre selon l'une des revendications 19 à 21, **caractérisé en ce qu'**il est prévu un autre amortisseur (6) pour l'amortissement du déplacement du coffre (21) dans sa position fermée.
